# FASCICULE DE BREVET EUROPEEN

(11) **EP 3 455 228 B1**
(45) Date de publication et mention de la délivrance du brevet: **29.07.2020**
(21) Numéro de dépôt: 17728906.3
(22) Date de dépôt: 05.05.2017
(51) Int. Cl.: C07F 9/535, C07F 9/568, C07F 9/572, C07F 7/18, C07F 7/30

(54) **PROCÉDÉ D'HYDROSILYLATION METTANT EN OEUVRE UN CATALYSEUR ORGANIQUE DERIVÉ DE GERMYLÈNE**
HYDROSILYLIERUNGSVERFAHREN MIT EINEM ORGANISCHEN KATALYSATOR AUS GERMYLEN
HYDROSILYLATION METHOD USING A GERMYLENE-DERIVED ORGANIC CATALYST

(30) Priorité: 10.05.2016 FR 1600757
(43) Date de publication de la demande: 20.03.2019
(73) Titulaire: ELKEM SILICONES France SAS, 69003 Lyon (FR); Centre National de la Recherche Scientifique, 75016 Paris (FR)
(72) Inventeur: BOUSQUIE, Magali, 69003 Lyon (FR); MAO, Yanli, 200093 Shanghai (CN); MIRGALET, Raphaël, 31400 Toulouse (FR); KATO, Tsuyoshi, 31400 Toulouse (FR); BACEIREDO, Antoine, 31500 Toulouse (FR)
(74) Mandataire: Mekki, Boualem
(86) Numéro de dépôt international: PCT/FR2017/000082
(87) Numéro de publication internationale: WO 2017/194848

(56) Documents cités:
- WO-A1-01/42258
- ANUKUL JANA ET AL: "Reactivity of germanium(II) hydride with nitrous oxide, trimethylsilyl azide, ketones, and alkynes and the reaction of a methyl analogue with trimethylsilyl diazomethane", DALTON TRANSACTIONS: THE INTERNATIONAL JOURNAL FOR INORGANIC, ORGANOMETALLIC AND BIOINORGANIC CHEMISTRY, vol. 39, no. 1, 1 janvier 2010 (2010-01-01), pages 132-138, XP055321193, GB ISSN: 1477-9226, DOI: 10.1039/B914164B
- SAM L. CHOONG ET AL: "Synthesis, Characterization, and Reactivity of an N-Heterocyclic Germanium(II) Hydride: Reversible Hydrogermylation of a Phosphaalkyne", ORGANOMETALLICS, vol. 30, no. 20, 24 octobre 2011 (2011-10-24), pages 5543-5550, XP055321209, US ISSN: 0276-7333, DOI: 10.1021/om200823x
- TERRANCE J. HADLINGTON ET AL: "Low Coordinate Germanium(II) and Tin(II) Hydride Complexes: Efficient Catalysts for the Hydroboration of Carbonyl Compounds", JOURNAL OF THE AMERICAN CHEMICAL SOCIETY, vol. 136, no. 8, 26 février 2014 (2014-02-26), pages 3028-3031, XP055171767, ISSN: 0002-7863, DOI: 10.1021/ja5006477 cité dans la demande

## Description

### Domaine de l'invention

La présente invention a pour objet un procédé d'hydrosilylation d'un composé insaturé avec un composé comprenant au moins une fonction hydrogénosilyle, catalysé par des composés organiques de germanium. L'invention a également pour objet lesdits composés organiques de germanium.

### Art antérieur

Lors d'une réaction d'hydrosilylation (également appelée polyaddition), un composé insaturé, c'est-à-dire comprenant au moins une insaturation de type double ou triple liaison réagit avec un composé comprenant au moins une fonction hydrogénosilyle, c'est-à-dire un atome d'hydrogène lié à un atome de silicium. Cette réaction peut par exemple être décrite dans le cas d'une insaturation de type C=O telles que celle portée par les composés cétone ou aldéhyde par : 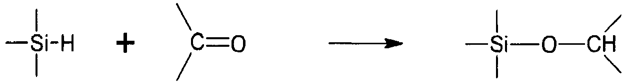 ou dans le cas d'une insaturation de type alcène par : 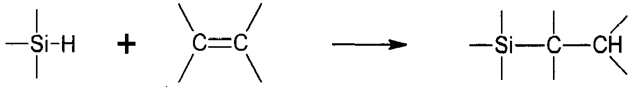 ou encore dans le cas d'une insaturation de type alcyne par :

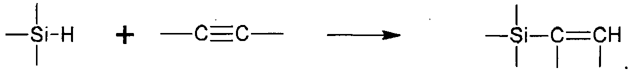

La réaction d'hydrosilylation de composés insaturés est réalisée par catalyse, à l'aide de catalyseur organométallique. Actuellement, le catalyseur organométallique approprié pour cette réaction est un catalyseur au platine. Ainsi, la plupart des procédés industriels d'hydrosilylation, en particulier d'alcènes, sont catalysées par le complexe de platine de Karstedt, de formule générale Pt₂(divinyltétraméthyldisiloxane)₃ (ou en abrégé Pt₂(DVTMS)₃) :

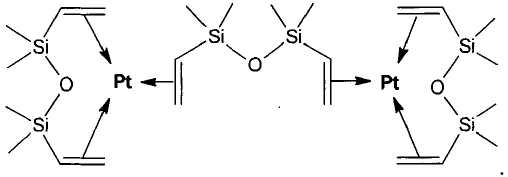

Au début des années 2000, la préparation de complexes de platine - carbène de formule générale : 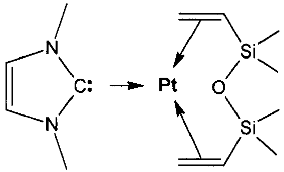 a permis d'avoir accès à des catalyseurs plus stables (voir par exemple la demande internationale de brevet WO 01/42258).

Toutefois, l'utilisation de catalyseurs organométalliques au platine est toujours problématique. Il s'agit d'un métal cher et en voie de raréfaction et dont le coût fluctue énormément. Son utilisation à l'échelle industrielle est donc difficile. On souhaite donc diminuer autant que possible la quantité de catalyseur nécessaire à la réaction, sans pour autant diminuer le rendement et la vitesse de la réaction. Par ailleurs, on souhaite disposer d'un catalyseur stable au cours de la réaction. Il a été constaté que, lors de la réaction catalysée, le platine métallique pouvait précipiter, ce qui a pour conséquence la formation de colloïdes insolubles dans le milieu réactionnel. Le catalyseur est alors moins actif. De plus, ces colloïdes forment un trouble dans le milieu réactionnel, et les produits obtenus ne sont pas satisfaisants esthétiquement car ils sont colorés.

Dans un contexte mondial de plus en plus concurrentiel et où l'environnement prend chaque jour une place de plus en plus important, développer des procédés d'hydrosilylation catalysés par des composés plus écologiques et économiques est vivement souhaité. La catalyse organique sans métaux est considérée comme une approche prometteuse afin de mettre en pratique ces concepts de chimie verte.

Cependant, les catalyseurs organiques sont instables à l'air et se dégradent rapidement, ce qui rend leur utilisation particulièrement délicate. C'est le cas par exemple des composés organiques d'hydrure de germanium, qui sont connus pour se dégrader rapidement à l'air (Angew. Chem. Int. Ed. 2006, 45, 2602 -2605).

En outre, la réactivité de ces catalyseurs organiques est souvent moins bonne que celles des dérivés organométalliques. On peut aussi citer les références publiées dans :
*1)* Dalton Transactions: the international journal for inorganic, organometallic and bioinorganic chemistry, 39(1), pp. 132-138*, et*
*2)* Organometallics, 30(20), pp.5543-5550

Ainsi, l'un des objectifs de la présente invention est de proposer un procédé d'hydrosilylation catalysé par un nouveau type de composé organique qui soit stable à l'air et dans le milieu réactionnel, et qui ont une bonne réactivité.

Les inventeurs de la présente demande ont développé un procédé d'hydrosilylation catalysé par des composés organiques de germanium. De façon tout à fait surprenante, ils ont mis en évidence que la structure cyclique particulière de ces composés, permettait d'obtenir des composés organiques de germanium stable à l'air et dans le milieu réactionnel, qui ont une bonne réactivité vis-à-vis de la réaction d'hydrosilylation et, par conséquent, pouvant catalyser ledit procédé d'hydrosilylation.

La réactivité d'un hydrure de germanium tri-coordonné, le (^{Dip}NacNac)GeH, a fait l'objet d'une projection théorique par Takagi et al. (J. Am. Chem. Soc., 2013, 135, 8955-8965) par la théorie de la fonctionnelle de la densité (calcul DFT). Les calculs semblent indiquer que, théoriquement, l'hydrure de germanium tri-coordonné pourrait être un catalyseur d'une réaction d'hydrosilylation de cétone. Cependant, les expériences ultérieures réalisées par Hadlington et al. (J. Am. Chem. Soc., 2014, 136,3028-3031) ont mis en évidence que l'hydrure de germanium tri-coordonné (^{Dip}NacNac)GeH ne réagit qu'avec des cétones activées, et que sa réactivité est moindre que celle de composés de type hydrure de germanium bi-coordonné. Hadlington *et al.* explique que le composé bi-coordonné est plus réactif car moins stable que le composé tri-coordonné. Ainsi, Hadlington *et al.* suggère qu'augmenter la stabilité des hydrures de germanium entrainerait une diminution de leur réactivité.

Les inventeurs de la présente demande ont toutefois mis en évidence que certains composés organiques de germanium de formule spécifique, stabilisés structurellement, pouvaient catalyser efficacement des procédés d'hydrosilylation.

### Brève description de l'invention

La présente invention a pour objet un procédé d'hydrosilylation d'un composé insaturé (A) comprenant au moins une fonction cétone, une fonction aldéhyde, une fonction alcène et/ou une fonction alcyne, avec un composé (B) comprenant au moins une fonction hydrogénosilyle, ledit procédé étant caractérisé en ce qu'il est catalysé par un composé organique (C) représenté par la formule (1): 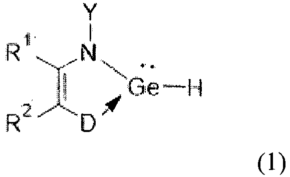 dans laquelle :
- les symboles « Ge », « N » et « H » représentent respectivement un atome de germanium, un atome d'azote et un atome d'hydrogène,
- le symbole **Y** est un groupe alkyle contenant de 1 à 12 atomes de carbone, ou un groupe aryle contenant de 6 à 30 atomes de carbone, et de préférence **Y** est un groupe aryle contenant de 6 à 30 atomes,
- les groupes R¹ et R², identiques ou différents, représentent un atome d'hydrogène, un groupe alkyle contenant de 1 à 30 atomes de carbone, un groupe alcènyle contenant de 2 à 12 atomes de carbone, un groupe aryle contenant de 6 à 18 atomes de carbone, R¹ et R² pouvant être reliés par une liaison covalente de manière à former un cycle ou un bicycle, éventuellement substitué, ayant de 5 à 8 atomes, et de préférence R¹ et R² sont reliés par une liaison covalente de manière à former un cycle ou un bicycle, éventuellement substitué, ayant de 5 à 8 atomes de carbone,
- le symbole « 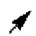 » représente une liaison covalente de coordination due à la présence dans le ligand D d'une paire libre d'électrons, et
**D** est un ligand qui est un groupement phosphine, sulfure ou iminophosphorane comportant une paire libre d'électrons.

En outre, l'invention a aussi pour objet un composé organique (C) représenté par la formule (1): 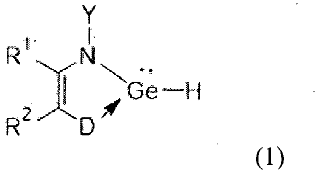 dans laquelle :
- les symboles « Ge », « N » et « H » représentent respectivement un atome de germanium, un atome d'azote et un atome d'hydrogène,
- le symbole **Y** est un groupe alkyle contenant de 1 à 12 atomes de carbone, ou un groupe aryle contenant de 6 à 18 atomes de carbone, et de préférence **Y** est un groupe aryle contenant de 6 à 18 atomes,
- les groupes R¹ et R², identiques ou différents, représentent un atome d'hydrogène, un groupe alkyle contenant de 1 à 20 atomes de carbone, un groupe alcènyle contenant de 2 à 12 atomes de carbone, un groupe aryle contenant de 6 à 18 atomes de carbone, R¹ et R² pouvant être reliés par une liaison covalente de manière à former un cycle ou un bicycle, éventuellement substitué, ayant de 5 à 8 atomes, et de préférence R¹ et R ² sont reliés par une liaison covalente de manière à former un cycle ou un bicycle, éventuellement substitué, ayant de 5 à 8 atomes de carbone,
- le symbole « 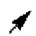 » représente une liaison covalente de coordination due à la présence dans le ligand **D** d'une paire libre d'électrons, et
**D** est un ligand qui est un groupement phosphine, sulfure ou iminophosphorane comportant une paire libre d'électrons.

Ces composés organiques sont particulièrement adaptés à une utilisation en tant que catalyseur d'hydrosilylation, ce qui constitue également un objet de la présente invention.

Enfin, l'invention a pour objet une composition comprenant :
- au moins un composé insaturé (A) comprenant au moins une fonction cétone, une fonction aldéhyde, une fonction alcène et/ou une fonction alcyne,
- au moins un composé (B) comprenant au moins une fonction hydrogénosilyle, et
- un catalyseur choisi parmi les composés organiques (C) de formule (1) tels que définis ci-dessus.

### Description détaillée de l'invention

### Procédé

Selon un premier aspect, la présente invention concerne un procédé d'hydrosilylation d'un composé insaturé (A), c'est-à-dire comprenant au moins une insaturation de type double ou triple liaison, ladite insaturation étant portée par au moins une fonction cétone, une fonction aldéhyde, une fonction alcène et/ou une fonction alcyne, de préférence portée par au moins une fonction alcène et/ou au moins une fonction alcyne, avec un composé (B) comprenant au moins une fonction hydrogénosilyle (=Si-H), ledit procédé étant caractérisé en ce qu'il est catalysé par un composé organique (C) représenté par la formule (1): 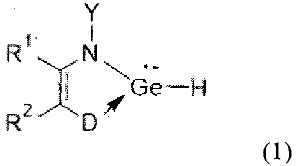 dans laquelle :
- les symboles « Ge », « N » et « H » représentent respectivement un atome de germanium, un atome d'azote et un atome d'hydrogène,
- le symbole **Y** est un groupe alkyle contenant de 1 à 12 atomes de carbone, ou un groupe aryle contenant de 6 à 30 atomes de carbone, et de préférence **Y** est un groupe aryle contenant de 6 à 30 atomes,
- les groupes R¹ et R², identiques ou différents, représentent un atome d'hydrogène, un groupe alkyle contenant de 1 à 30 atomes de carbone, un groupe alcènyle contenant de 2 à 12 atomes de carbone, un groupe aryle contenant de 6 à 18 atomes de carbone, R¹ et R² pouvant être reliés par une liaison covalente de manière à former un cycle ou un bicycle, éventuellement substitué, ayant de 5 à 8 atomes, et de préférence R¹ et R² sont reliés par une liaison covalente de manière à former un cycle ou un bicycle, éventuellement substitué, ayant de 5 à 8 atomes de carbone,
- le symbole « 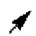 » représente une liaison covalente de coordination due à la présence dans le ligand **D** d'une paire libre d'électrons, et
- **D** est un ligand qui est un groupement phosphine, sulfure ou iminophosphorane comportant une paire libre d'électrons.

Le composé organique (C) est caractérisé en ce qu'il comprend une structure cyclique autour de l'atome de germanium et un groupement donneur d'un doublet d'électrons à l'atome de germanium. La Demanderesse a mis en évidence que cette structure cyclique particulière permettait de stabiliser le composé organique (C) sans pour autant altérer sa réactivité.

Sans vouloir être lié par une quelconque théorie, le ligand D selon l'invention semble permettre une complexation intramoléculaire de l'atome de germanium dans le composé organique (C), améliorant ainsi sa stabilité à l'air et dans le milieu réactionnel.

Dans le cas du composé organique (C), l'atome de germanium est lié à un atome d'azote et à un atome d'hydrogène par des liaisons covalentes, et au groupement donneur par une liaison covalente de coordination.

Par « alkyle », on entend selon l'invention une chaîne hydrocarbonée saturée, linéaire ou ramifiée, contenant de 1 à 30 atomes de carbone, de préférence de 1 à 8 atomes de carbone. Un groupe alkyle peut être choisi parmi les groupes méthyle, éthyle, isopropyle, n-propyle, tert-butyle, isobutyle, n-butyle, n-pentyle, isoamyle et 1,1-diméthylpropyle.

Par « atome d'halogène », on entend selon l'invention un atome choisi dans le groupe constitué par le fluor, le chlore, le brome et l'iode.

Par « alcényle », on entend selon l'invention une chaîne hydrocarburée insaturée, linéraire ou ramifiée contenant de 2 à 12 atomes de carbone.

Par « halogénoalkyle », on entend selon l'invention un groupe alkyle tel que défini ci-avant substitué par un atome d'halogène tel que défini ci-avant.

Par « cycloalkyle », on entend selon l'invention un groupe hydrocarboné saturé monocyclique ou polycyclique, de préférence monocyclique ou bicyclique, contenant de 3 à 20 atomes de carbone, de préférence de 3 à 8 atomes de carbone. Lorsque le groupe cycloalkyle est polycyclique, les multiples noyaux cycliques peuvent être rattachés les uns aux autres par une liaison covalente et/ou par un atome spiranique et/ou être condensés les uns aux autres. Un groupe cycloalkyle peut être choisi parmi les groupes cyclopropyle, cyclobutyle, cyclopentyle, cyclohexyle, cycloheptyle, cyclooctyle, adamantane et norborane.

Par « cycloalkyle-alkyle », on entend selon l'invention un groupe cycloalkyle tel que défini ci-avant substitué par un groupe alkyle également tel que défini ci-avant.

Par « aryle », on entend selon l'invention un groupe hydrocarboné aromatique contenant de 6 à 30 atomes de carbone, monocyclique ou polycyclique. Un groupe aryle peut être choisi parmi les groupes phényle, naphtyle, anthracényle et phénanthryle.

Par « aryle-alkyle », on entend selon l'invention un groupe aryle tel que défini ci-avant substitué par un groupe alkyle également tel que défini ci-avant.

Selon un mode de réalisation particulièrement préféré de l'invention, le procédé selon l'invention est caractérisé en ce que le ligand **D** est choisi parmi le groupe constitué par :
- un groupement phosphine de formule (2) suivante : 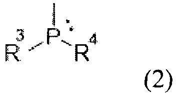 dans laquelle :
   - les groupes R³ et R⁴, identiques ou différents, représentent un atome d'hydrogène, un atome d'halogène, un groupe halogénoalkyle contenant de 1 à 20 atomes de carbone, un groupe alkyle contenant de 1 à 20 atomes de carbone et éventuellement un ou plusieurs atomes d'azote ou de silicium, un groupe cycloalkyle contenant de 5 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone, et lorsque R³ et R⁴ sont des groupes alkyles contenant de 1 à 20 atomes de carbone et éventuellement un ou plusieurs atomes d'azote et/ou de silicium, lesdits groupes R³ et R⁴ peuvent être reliés par une liaison covalente de manière à former avec l'atome de phosphore un cycle à 4 ou 5 atomes éventuellement substitué par un ou plusieurs groupe(s) alkyle(s) ayant de 1 à 10 atomes de carbone;
- un groupement sulfure de formule (3) suivante: 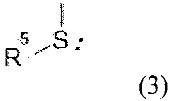 dans laquelle :
   - le groupe R⁵, représente un atome d'hydrogène, un atome d'halogène, un groupe alkyle ou halogénoalkyle contenant de 1 a 20 atomes de carbone, un groupe cycloalkyle contenant de 5 3 a 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; R⁵ pouvant également former, avec les atomes auxquels il est lié, un cycle monocyclique ou polycyclique constitué de 3 à 20 atomes ; et
- un groupement iminophosphorane de formule (4) suivante : 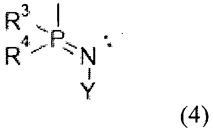 dans laquelle :
   - le symbole Y représente un groupe alkyle contenant de 1 à 12 atomes de carbone, ou un groupe aryle contenant de 6 à 18 atomes de carbone,
      les groupes R³ et R⁴ identiques ou différents, représentent un atome d'hydrogène, un atome d'halogène, un groupe alkyle ou halogenoalkyle contenant de 1 a 20 atomes de carbone, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; avec R³ et R⁴ pouvant également former soit ensemble ou soit avec les atomes auxquels ils sont liés, un cycle monocyclique ou polycyclique constitué de 3 à 20 atomes et pouvant contenir un ou plusieurs atomes d'azote ou de silicium.

Selon un mode de réalisation avantageux, le ligand **D** est un groupement phosphine de formules (5) ou (6) suivantes: 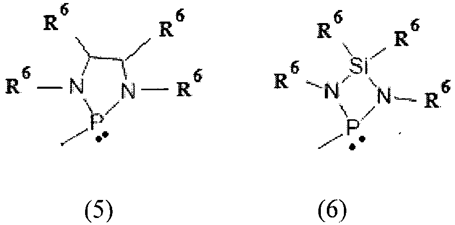 dans lesquelles les groupements R⁶ sont identiques ou différents et représentent un groupe alkyle ayant de 1 à 10 atomes de carbone.

Il est particulièrement avantageux de choisir le composé organique **C** parmi le groupe constitué par les composés de formules (7), (8), (9), (10), (11), (12) et (13):

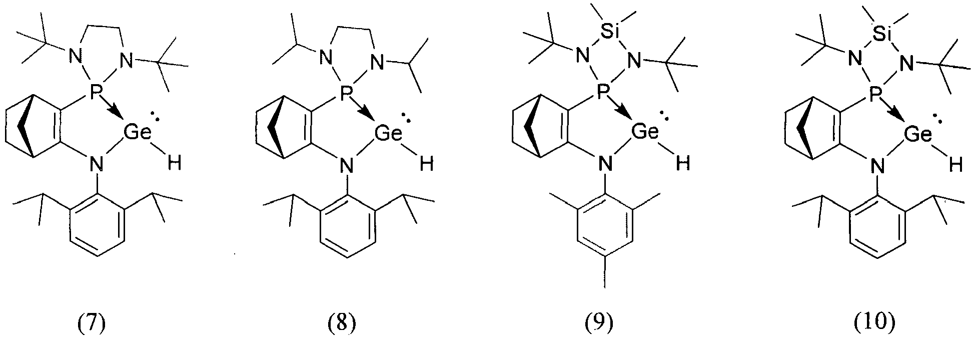

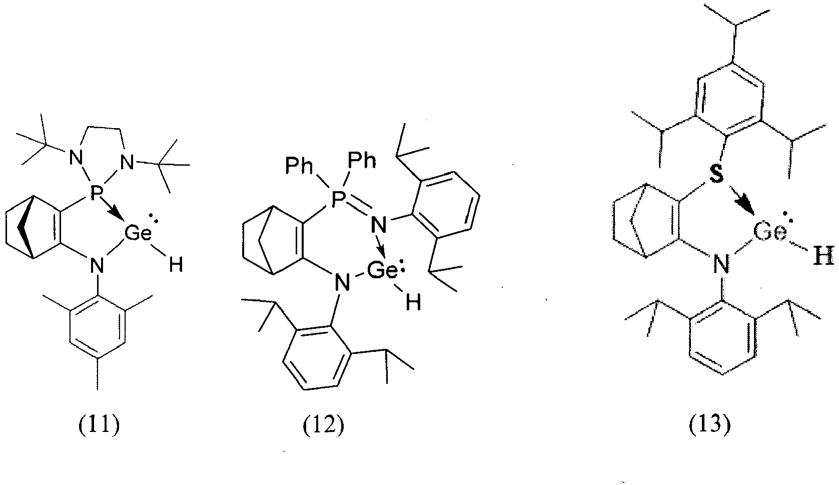

Le composé insaturé (A) mis en œuvre dans le procédé d'hydrosilylation selon l'invention est un composé chimique comprenant au moins une insaturation ne faisant pas partie d'un cycle aromatique. Le composé insaturé (A) comprend au moins une fonction cétone, une fonction aldéhyde, une fonction alcène et/ou une fonction alcyne. Tout composé comprenant au moins une fonction cétone, aldéhyde, alcène et/ou alcyne peut être utilisé dans le procédé selon l'invention, dans la mesure où il ne contient pas de fonction chimique réactive pouvant gêner, voire empêcher la réaction d'hydrosilylation.

Selon un mode de réalisation, le composé insaturé (A) comprend une ou plusieurs fonctions cétones et de 2 à 40 atomes de carbone. Le composé insaturé (A) peut alors, de préférence, être choisi parmi la trifluoroacétophénone, la diéthylcétone et l'acétophénone.

Selon un autre mode de réalisation, le composé insaturé (A) comprend une ou plusieurs fonctions aldéhydes et de 2 à 40 atomes de carbone. Le composé insaturé (A) peut alors, de préférence, être choisi parmi l'hexanal, le 4-fluorobenzaldéhyde et le benzaldéhyde.

Selon un mode préféré de réalisation particulièrement préféré, le composé insaturé (A) mis en œuvre dans le procédé d'hydrosilylation selon l'invention comprend une ou plusieurs fonctions alcène ou alcyne, et, de préférence, de 2 à 40 atomes de carbone.

Selon un autre mode de réalisation préféré, le composé insaturé (A) comprend une ou plusieurs fonctions alcène et de 2 à 40 atomes de carbone.

Selon un autre mode de réalisation préféré, le composé insaturé (A) comprend une ou plusieurs fonctions alcynes et de 2 à 40 atomes de carbone. Le composé insaturé (A) peut, de façon préférée, être choisi dans le groupe constitué par l'acétylène, les acrylates et les méthacrytales d'alkyles en C₁ à C₄, l'acide acrylique ou méthacrylique, les alcènes, de préférence l'octène et plus préférentiellement le 1-octène, l'alcool allylique, l'allylamine, l'éther d'allyle et glycidyle, l'éther d'allyle et de pipéridine, préférentiellement l'éther d'allyle et de pipéridine stériquement encombrée, les styrènes, préférentiellement l'alpha-méthyl-styrène, le 1,2-époxy-4-vinylcyclohexane, le chlorure d'allyle, les alcènes chlorés, de préférence le chlorure d'allyle, et les alcènes fluorés, de préférence de 4,4,5,5,6,6,7,7,7-nonafluoro-1-heptène.

Le composé insaturé (A) peut être choisi parmi les composés comprenant plusieurs fonctions alcènes, de préférence deux ou trois fonctions alcènes, et de façon particulièrement préférée, le composé (A) est choisi parmi les composés suivants : 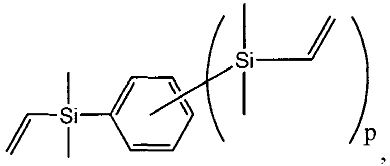 avec p valant 1 ou 2, 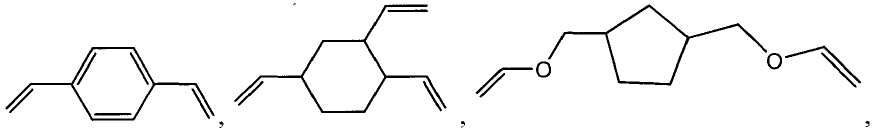 et 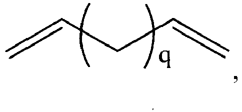 avec q valant de 2 à 6, de préférence q valant 2 ou 4.

Selon un mode de réalisation préféré, le composé insaturé (A) est choisi parmi les composés organopolysiloxanes comportant des motifs de formule (I) :

A_{g}UₕSiO_{(4-(g+h))/2} (I)

dans laquelle :
- les radicaux A, identiques ou différents, représentent un radical alcényle ou alcynyle, linéaire ou ramifié, contenant entre 2 et 6 atomes de carbone ;
- les radicaux U, identiques ou différents, représentent un radical monovalent différent d'un atome d'hydrogène, et de préférence choisi dans le groupe constitué par le méthyle, l'éthyle, le propyle, le 3,3,3-trifluoropropyle, le xylyle, le tolyle et le phényle.
- g et h représentent des nombres entiers, g valant 1 ou 2, h valant 0, 1 ou 2 et (g+h) valant 1, 2 ou 3 ;
et comportant éventuellement d'autres motifs de formule (II) :

UᵢSiO_{(4-i)/2} (II)

dans laquelle U a la même signification que ci-dessus, et i représente un nombre entier de 0 à 3.

Dans la formule (I) et dans la formule (II), U peut représenter un radical monovalent choisi dans le groupe constitué par un groupe alkyle ayant 1 à 8 atomes de carbone, éventuellement substitué par au moins un atome d'halogène, et un groupe aryle. U peut avantageusement représenter un radical monovalent choisi dans le groupe constitué par le méthyle, l'éthyle, le propyle, le 3,3,3-trifluoropropyle, le xylyle, le tolyle et le phényle.

Des exemples d'organopolysiloxanes pouvant être des composés insaturés (A) selon l'invention sont :
- un poly(diméthylsiloxane) à extrémités diméthylvinylsilyles ;
- un poly(diméthylsiloxane-co-méthylphénylsiloxane) à extrémités diméthyl-vinylsilyles ;
- un poly(diméthylsiloxane-co-méthylvinylsiloxane) à extrémités diméthyl-vinylsilyles ; et
- un poly(diméthylsiloxane-co-méthylvinylsiloxane) à extrémités triméthyl-silyles ; et
un poly(méthylvinylsiloxane) cycliques.

Comme autres exemples de composés insaturés (A) on peut citer les résines silicones qui comportent au moins un radical vinyle. Par exemple elles peuvent être choisies parmi le groupe constitué par les résines silicones suivantes :
- MD^{Vi}Q où les groupes vinyles sont inclus dans les motifs D,
- MD^{Vi}TQ où les groupes vinyles sont inclus dans les motifs D,
- MM^{Vi}Q où les groupes vinyles sont inclus dans une partie des motifs M,
- MM^{Vi}TQ où les groupes vinyles sont inclus dans une partie des motifs M,
- MM^{Vi}DD^{Vi}Q où les groupes vinyles sont inclus dans une partie des motifs M et D,
- et leurs mélanges,
avec :
- M^{Vi} = motif siloxyle de formule (R)₂(vinyle)SiO_{1/2}
- D^{Vi} = motif siloxyle de formule (R)(vinyle)SiO_{2/2}
- T = motif siloxyle de formule (R)SiO_{3/2}
- Q = motif siloxyle de formule SiO_{4/2}
- M = motif siloxyle de formule (R)₃SiO_{1/2}
- D = motif siloxyle de formule (R)₂SiO_{2/2}
et les groupements R, identiques ou différents, sont des groupes hydrocarbonés monovalents choisis parmi les groupes alkyles ayant de 1 à 8 atomes de carbone inclus tels que les groupes méthyle, éthyle, propyle et 3,3,3-trifluoropropyle et les groupes aryle tels que xylyle, tolyle et phényle. De préférence, les groupements R sont des méthyles.

Le procédé d'hydrosilylation selon l'invention met également en œuvre un composé (B) comprenant au moins une fonction hydrogénosilyle. Selon un mode de réalisation, le composé (B) comprenant au moins une fonction hydrogénosilyle est un composé silane ou polysilane comprenant au moins un atome d'hydrogène lié à un atome de silicium.

Par composé « silane », on entend dans la présente invention les composés chimiques comprenant un atome de silicium lié à quatre atomes d'hydrogènes ou à des substituants organiques. Par composé « polysilane », on entend dans la présente invention les composés chimiques possédant au moins un motif ≡Si-Si≡.

Selon un mode de réalisation particulièrement préféré, le composé (B) est le phénylsilane.

Le composé (B) peut également être un composé organopolysiloxane comprenant au moins un atome d'hydrogène lié à un atome de silicium. Par composé « organopolysiloxane », on entend dans la présente invention les composés chimiques possédant au moins un motif ≡Si-O-Si≡. Le composé organopolysiloxane comprend au moins deux atomes de silicium, de préférence au moins 3 atomes de silicium ou plus.

Ledit composé (B) peut avantageusement être un organopolysiloxane comprenant au moins un motif de formule (III) :

H_{d}UₑSiO_{(4-(d+e))/2} (III)

dans laquelle :
- les radicaux U, identiques ou différents, représentent un radical monovalent différent d'un atome d'hydrogène, et de préférence choisi dans le groupe constitué par le méthyle, l'éthyle, le propyle, le 3,3,3-trifluoropropyle, le xylyle, le tolyle et le phényle:
- d et e représentent des nombres entiers, d valant 1 ou 2, e valant 0, 1 ou 2 et (d+e) valant 1, 2 ou 3 ;
et éventuellement d'autres motifs de formule (IV) :

U_{f}SiO_{(4-f)/2} (IV)

dans laquelle U a la même signification que ci-dessus, et f représente un nombre entier compris entre 0 et 3.

Il est entendu dans la formule (III) et dans la formule (IV) ci-dessus que, si plusieurs groupes U sont présents, ils peuvent être identiques ou différents les uns des autres. Dans la formule (III), le symbole d peut préférentiellement valoir 1. De plus, dans la formule (III) et dans la formule (IV), U peut représenter un radical monovalent choisi dans le groupe constitué par un groupe alkyle ayant 1 à 8 atomes de carbone, éventuellement substitué par au moins un atome d'halogène, et un groupe aryle. U peut avantageusement représenter un radical monovalent choisi dans le groupe constitué par méthyle, éthyle, propyle, 3,3,3-trifluoropropyle, xylyle, tolyle et phényle. Des exemples de motifs de formule (III) sont les suivants : H(CH₃)₂SiO_{1/2}, HCH₃SiO_{2/2} et H(C₆H₅)SiO_{2/2}.

L'organopolysiloxane peut présenter une structure linéaire, ramifié, cyclique ou en réseau. Des exemples d'organopolysiloxanes pouvant être des composés organopolysiloxane comprenant au moins un atome d'hydrogène lié à un atome de silicium sont :
- un poly(diméthylsiloxane) à extrémités hydrogénodiméthylsilyles;
- un poly(diméthylsiloxane-co-méthylhydrogénosiloxane) à extrémités triméthyl-silyles;
- un poly(diméthylsiloxane-co-méthylhydrogénosiloxane) à extrémités hydrogénodiméthylsilyles ;
- un poly(méthylhydrogénosiloxane) à extrémités triméthylsilyles ; et
- un poly(méthylhydrogénosiloxane) cycliques.

De préférence, le composé (B) est un composé organopolysiloxane comprenant par molécule au moins deux fonctions hydrogénosilyle (Si-H).

Selon un mode de réalisation préféré, le procédé selon l'invention est caractérisé en ce que :
a) le composé insaturé (A) est choisi parmi les composés organopolysiloxanes comportant des motifs de formule (I) :

   A_{g}UₕSiO_{(4-(g+h))/2} (I)

   dans laquelle :
   - les radicaux A, identiques ou différents, représentent un radical alcényle ou alcynyle, linéaire ou ramifié, contenant entre 2 et 6 atomes de carbone ;
   - les radicaux U, identiques ou différents, représentent un radical monovalent différent d'un atome d'hydrogène, et de préférence choisi dans le groupe constitué par le méthyle, l'éthyle, le propyle, le 3,3,3-trifluoropropyle, le xylyle, le tolyle et le phényle.
   - g et h représentent des nombres entiers, g valant 1 ou 2, h valant 0, 1 ou 2 et (g+h) valant 1, 2 ou 3 ; et
   - comportant éventuellement d'autres motifs de formule (II) :

      UᵢSiO_{(4-i)/2} (II)
   - dans laquelle U a la même signification que ci-dessus, et i représente un nombre entier de 0 à 3, et
b) le composé (B) est un organopolysiloxane comprenant au moins un motif de formule (III) :

   H_{d}UₑSiO_{(4-(d+e))/2} (III)

   dans laquelle :
   - les radicaux U, identiques ou différents, représentent un radical monovalent différent d'un atome d'hydrogène, et de préférence choisi dans le groupe constitué par le méthyle, l'éthyle, le propyle, le 3,3,3-trifluoropropyle, le xylyle, le tolyle et le phényle.
   - d et e représentent des nombres entiers, d valant 1 ou 2, e valant 0, 1 ou 2 et (d+e) valant 1, 2 ou 3 ;
   - et éventuellement d'autres motifs de formule (IV) :

      U_{f}SiO_{(4-f)/2} (IV)
   dans laquelle U a la même signification que ci-dessus, et f représente un nombre entier compris entre 0 et 3.

Enfin, le composé (B) peut être un polymère organique comprenant des fonctions hydrogénosilyles en positions terminales. Le polymère organique peut par exemple être un polyoxoalkylène, un polymère hydrocarboné saturé ou un poly(méth)acrylate. Des polymères organiques comprenant des fonctions réactives en positions terminales sont notamment décrits dans les demandes de brevet US 2009/0182099 et US 2009/0182091.

Selon un mode de réalisation préféré, le composé (B) comprenant au moins une fonction hydrogénosilyle est choisi parmi le groupe constitué par:
- un composé silane ou polysilane comprenant au moins un atome d'hydrogène lié à un atome de silicium,
- un composé organopolysiloxane comprenant au moins un atome d'hydrogène lié à un atome de silicium, de préférence un composé organopolysiloxane comprenant par molécule au moins deux fonctions hydrogénosilyle, et
- un polymère organique comprenant des fonctions hydrogénosilyles en positions terminales.

Selon un mode de réalisation particulier de la présente invention, il est possible que le composé insaturé (A) et le composé (B) comprenant au moins une fonction hydrogénosilyle soient un seul et même composé, comprenant d'une part au moins une fonction cétone, une fonction aldéhyde, une fonction alcène et/ou une fonction alcyne, et d'autre part au moins un atome de silicium et au moins un atome d'hydrogène lié à l'atome de silicium. Ce composé peut alors être qualifié de « bifonctionnel », et il est susceptible de réagir sur lui-même par réaction d'hydrosilylation. L'invention peut donc aussi concerner un procédé d'hydrosilylation d'un composé bifonctionnel avec lui-même, ledit composé bifonctionnel comprenant d'une part au moins une fonction cétone, une fonction aldéhyde, une fonction alcène et/ou une fonction alcyne - de préférence au moins une fonction alcène et/ou au moins une fonction alcyne -, et d'autre part au moins un atome de silicium et au moins un atome d'hydrogène lié à l'atome de silicium, ledit procédé étant caractérisé par le fait qu'il est catalysé par un composé organique (C) tel que décrit ci-dessus.

Des exemples d'organopolysiloxanes pouvant être des composés bifonctionnels sont :
- un poly(diméthylsiloxane-co-hydrogénométhylsiloxane-co-vinylméthyl-siloxanes) à extrémités diméthylvinylsilyles;
- un poly(diméthylsiloxane-co-hydrogénométhylsiloxane-co-vinylméthyl-siloxanes) à extrémités diméthylhydrogénosilyles ; et
- un poly(diméthylsiloxane-co-hydrogénométhylsiloxane-co-propylglycidyléther-méthylsiloxane) à extrémités triméthylsilyles.

Lorsqu'il est question de la mise en œuvre du composé insaturé (A) et du composé (B) comprenant au moins une fonction hydrogénosilyle, l'homme du métier comprend qu'on entend également la mise en œuvre d'un composé bifonctionnel.

La réaction d'hydrosilylation peut être réalisée dans un solvant ou en l'absence de solvant. En variante, un des réactifs, par exemple le composé insaturé (A), peut jouer le rôle de solvant. Des solvants appropriés sont des solvants miscibles avec le composé (B).

La réaction d'hydrosilylation peut être conduite à une température comprise entre 15°C et 300°C, préférentiellement entre 20°C et 240°C, plus préférentiellement entre 50°C et 200°C, plus préférentiellement entre 50°C et 140°C, et encore plus préférentiellement entre 50°C et 100°C.

### Composé organique (C)

L'invention a également pour objet un composé organique (C) représenté par la Formule 1 décrit précédemment, y compris tous les modes de réalisation dudit composé organique décrits précédemment.

En particulier, un objet de l'invention concerne le composé organique (C) représenté par la formule (1): 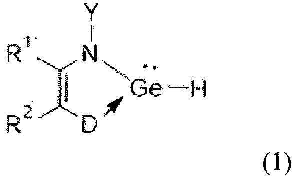 dans laquelle :
- les symboles « Ge », « N » et « H » représentent respectivement un atome de germanium, un atome d'azote et un atome d'hydrogène,
- le symbole **Y** est un groupe alkyle contenant de 1 à 12 atomes de carbone, ou un groupe aryle contenant de 6 à 18 atomes de carbone, et de préférence **Y** est un groupe aryle contenant de 6 à 18 atomes,
- les groupes R¹ et R², identiques ou différents, représentent un atome d'hydrogène, un groupe alkyle contenant de 1 à 20 atomes de carbone, un groupe alcènyle contenant de 2 à 12 atomes de carbone, un groupe aryle contenant de 6 à 18 atomes de carbone, R¹ et R² pouvant être reliés par une liaison covalente de manière à former un cycle ou un bicycle, éventuellement substitué, ayant de 5 à 8 atomes, et de préférence R¹ et R² sont reliés par une liaison covalente de manière à former un cycle ou un bicycle, éventuellement substitué, ayant de 5 à 8 atomes de carbone,
- le symbole « 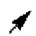 » représente une liaison covalente de coordination due à la présence dans le ligand **D** d'une paire libre d'électrons, et
**D** est un ligand qui est un groupement donneur comportant une paire libre d'électrons, et de préférence **D** est un ligand qui est un groupement phosphine, sulfure ou iminophosphorane comportant une paire libre d'électrons.

Selon un mode de réalisation préféré, le ligand **D** est choisi parmi le groupe constitué par :
- un groupement phosphine de formule (2) suivante : 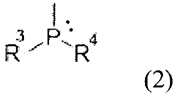 dans laquelle :
   - les groupes R³ et R⁴, identiques ou différents, représentent un atome d'hydrogène, un atome d'halogène, un groupe halogénoalkyle contenant de 1 à 20 atomes de carbone, un groupe alkyle contenant de 1 à 20 atomes de carbone et éventuellement un ou plusieurs atomes d'azote ou de silicium, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone, et lorsque R³ et R⁴ sont des groupes alkyles contenant de 1 à 20 atomes de carbone et éventuellement un ou plusieurs atomes d'azote et/ou de silicium, lesdits groupes R³ et R⁴ peuvent être reliés par une liaison covalente de manière à former avec l'atome de phosphore un cycle à 4, 5 ou 6 atomes éventuellement substitué par un ou plusieurs groupe(s) alkyle(s) ayant de 1 à 10 atomes de carbone;
- un groupement sulfure de formule (3) suivante: 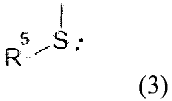 dans laquelle :
   - le groupe R⁵, représente un atome d'hydrogène, un atome d'halogène, un groupe alkyle ou halogénoalkyle contenant de 1 a 20 atomes de carbone, un groupe cycloalkyle contenant de 3 a 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; R⁵ pouvant également former, avec les atomes auxquels il est lié, un cycle monocyclique ou polycyclique constitué de 3 à 20 atomes ; et
- un groupement iminophosphorane de formule (4) suivante : 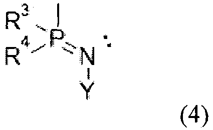 dans laquelle :
   - le symbole Y représente un groupe alkyle contenant de 1 à 30 atomes de carbone, ou un groupe aryle contenant de 6 à 18 atomes de carbone,
      les groupes R³ et R⁴ identiques ou différents, représentent un atome d'hydrogène, un atome d'halogène, un groupe alkyle ou halogenoalkyle contenant de 1 a 20 atomes de carbone, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; avec R³ et R⁴ pouvant également former soit ensemble ou soit avec les atomes auxquels ils sont liés, un cycle monocyclique ou polycyclique constitué de 3 à 20 atomes et pouvant contenir un ou plusieurs atomes d'azote ou de silicium.

De préférence, le ligand **D** est un groupement phosphine de formules (5) ou (6) suivantes: 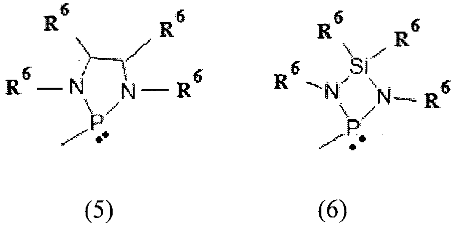 dans lesquelles les groupements R⁶ sont identiques ou différents et représentent un groupe alkyle ayant de 1 à 10 atomes de carbone.

L'invention concerne aussi les composés organiques (C) de formules (7), (8), (9), (10), (11), (12) et (13):

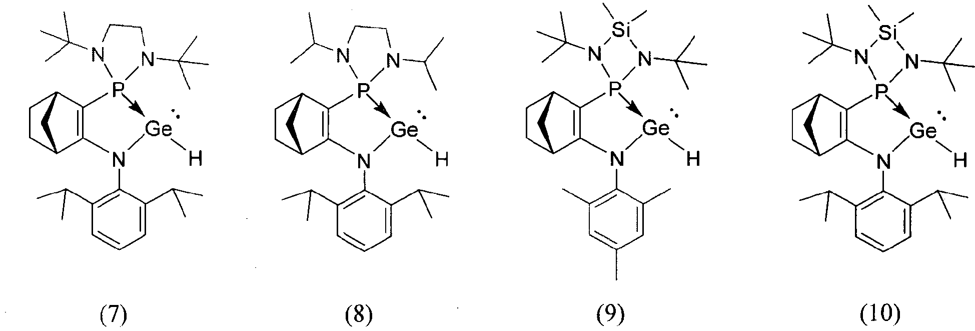

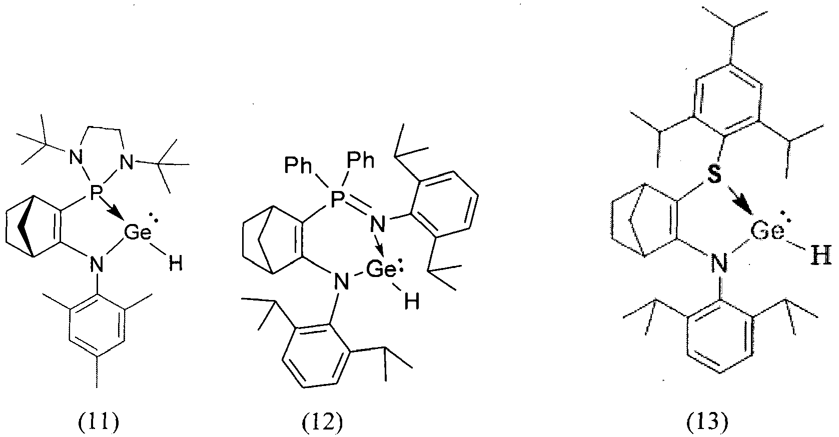

### Utilisation

La présente invention a également pour objet l'utilisation dudit composé organique (C) selon l'invention et tel que décrit ci-dessus en tant que catalyseur d'hydrosilylation.

### Composition

La présente invention a également pour objet une composition comprenant :
- au moins un composé insaturé (A) tel que décrit ci-dessus et en particulier comprenant au moins une fonction cétone, une fonction aldéhyde, une fonction alcène et/ou une fonction alcyne,
- au moins un composé (B) tel que décrit ci-dessus et en particulier comprenant au moins une fonction hydrogénosilyle, et
- un catalyseur choisi parmi les composés organiques (C) selon l'invention et tels que décrits ci-dessus.

Cette composition forme le milieu réactionnel dans lequel la réaction d'hydrosilylation selon l'invention peut intervenir. Pour ce faire, cette composition peut être chauffée comme décrit ci-avant.

La quantité relative de composé (A) et de composé (B) peut être contrôlée de façon à assurer un taux de réaction des insaturations avec des fonctions hydrogénosilyles. Le rapport molaire des fonctions Si-H des composés (B) sur les fonctions alcènes et alcynes des composés (A) est compris entre 1:100 et 100:1, de façon préférée entre 1:20 et 20:1, et de façon plus préférée entre 1:5 et 5:1.

Selon un mode de réalisation, le rapport molaire des fonctions Si-H des composés (B) sur les fonctions alcènes et alcynes des composés (A) est strictement inférieur à 1. Les fonctions Si-H sont ici en défaut par rapport aux fonctions insaturées. Selon un autre mode de réalisation, le rapport molaire des fonctions Si-H des composés (B) sur les fonctions alcènes et alcynes des composés (A) est strictement supérieur à 1. Les fonctions Si-H sont alors en excès par rapport aux fonctions insaturées.

Selon l'invention, la concentration molaire en catalyseur dans la composition est de 0,01% à 10%, de préférence de 0,1% à 7,5%, et de façon plus préférée de 0,5% à 5,5% par rapport au nombre de mole de composé insaturé (A).

En effet, lors de la réaction d'hydrosilylation, le composé insaturé (A) est usuellement en défaut, et la concentration molaire en catalyseur est exprimée par rapport au nombre de moles de composé (A) en défaut. Dans l'hypothèse où, lors de la réaction d'hydrosilylation, le composé (B) comprenant au moins une fonction hydrogénosilyle serait en défaut, la concentration molaire en catalyseur dans la composition serait de 0,5% à 10%, de préférence de 1% à 7,5%, et de façon plus préférée de 1,5% à 5,5% par rapport au nombre de mole de composé (B) en défaut. Outre le composé insaturé (A) et le composé (B) comprenant au moins une fonction hydrogénosilyle, la composition de l'invention peut éventuellement comprendre des additifs.

Selon un mode de réalisation de l'invention, l'additif peut être un inhibiteur ou retardateur de la réaction d'hydrosilylation. Ces composés sont connus de l'homme de l'art.

Les compositions de l'invention peuvent, en outre, comprendre des additifs fonctionnels usuels. Comme familles d'additifs fonctionnels usuels, on peut citer :
- les charges ;
- les promoteurs d'adhérence ;
- les modulateurs d'adhérence ;
- les additifs de tenue thermique ;
- les additifs pour augmenter la consistance ;
- les pigments ; et
- les additifs de tenue thermique, de tenue aux huiles ou de tenue au feu, par exemple les oxydes métalliques.

Les charges éventuellement prévues sont de préférence minérales. Elles peuvent être notamment siliceuses. S'agissant des matières siliceuses, elles peuvent jouer le rôle de charge renforçante ou semi-renforçante. Les charges siliceuses renforçantes sont choisies parmi les silices colloïdales, les poudres de silice de combustion et de précipitation ou leurs mélanges. Ces poudres présentent une taille moyenne de particule généralement inférieure à 0,1 µm (micromètres) et une surface spécifique BET supérieure à 30 m²/g, de préférence comprise entre 30 et 350 m²/g. Les charges siliceuses semi-renforçantes telles que des terres de diatomées ou du quartz broyé, peuvent être également employées. En ce qui concerne les matières minérales non siliceuses, elles peuvent intervenir comme charge minérale semi-renforçante ou de bourrage. Des exemples de ces charges non siliceuses utilisables seules ou en mélange sont le noir de carbone, le dioxyde de titane, l'oxyde d'aluminium, l'alumine hydratée, la vermiculite expansée, la vermiculite non expansée, le carbonate de calcium éventuellement traité en surface par des acides gras, l'oxyde de zinc, le mica, le talc, l'oxyde de fer, le sulfate de baryum et la chaux éteinte. Ces charges ont une granulométrie généralement comprise entre 0,001 et 300 µm (micromètres) et une surface BET inférieure à 100 m²/g. De façon pratique mais non limitative, les charges employées peuvent être un mélange de quartz et de silice. Les charges peuvent être traitées par tout produit approprié. Sur le plan pondéral, on préfère mettre en œuvre une quantité de charge comprise entre 1% et 50% en poids, de préférence entre 1% et 40% en poids par rapport à l'ensemble des constituants de la composition.

Plus généralement, sur le plan quantitatif, les compositions selon l'invention peuvent présenter des proportions standards dans le domaine technique considéré, sachant que l'on doit tenir compte également de l'application visée.

D'autres buts, caractéristiques et avantages de l'invention apparaîtront des exemples suivants, qui sont donnés à titre purement illustratif et nullement limitatif.

### Exemples

- Composés organiques (7), (8), (9), (10) et (11) selon l'invention: 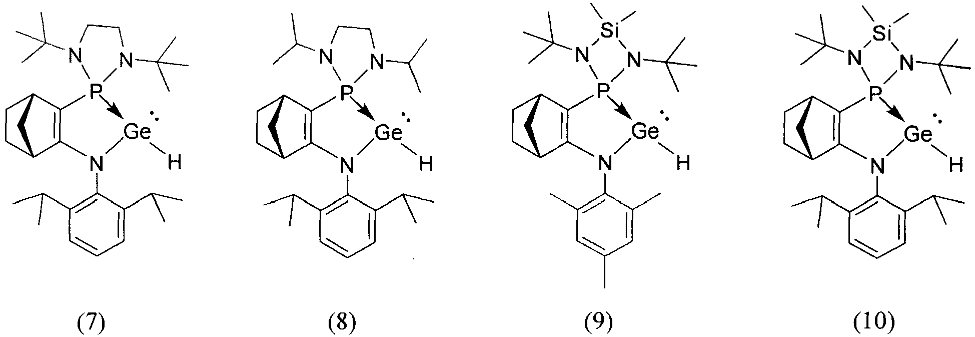 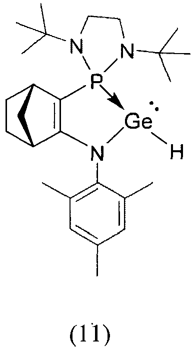
- Composé organique comparatif **D_{H}** :

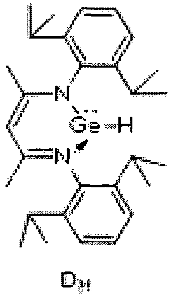

Toutes les manipulations ont été réalisées sous atmosphère d'argon à l'aide de techniques de Schlenk et d'une boîte à gants. Les solvants ont été séchés et dégazé. Les différents spectres RMN (¹H, ¹³C, ¹⁹F, ²⁹Si et ³¹P) ont été enregistrés sur un spectromètre Bruker Advance 300 MHz. Les déplacements chimiques des spectres RMN ¹H, ²⁹Si et ¹³C sont donnés en ppm par rapport à (CH₃)₄Si comme étalon interne. Ceux des spectres ³¹P sont donnés en ppm par rapport à H₃PO₄ (85%). Les analyses GC-MS ont été réalisées sur un chromatographe Perkin-Elmer Clarus 500 équipé d'une FID, d'un détecteur MS et d'une colonne SGE BPX5.

### Exemple 1 : Préparation du composé organique (7) selon l'invention :

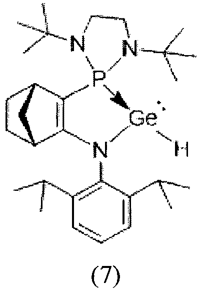

### 1-a) Schéma réactionnel :

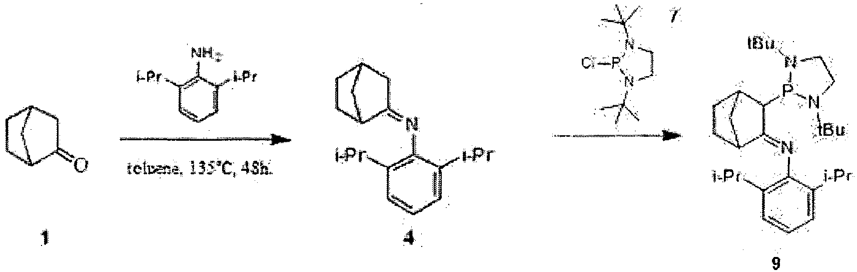

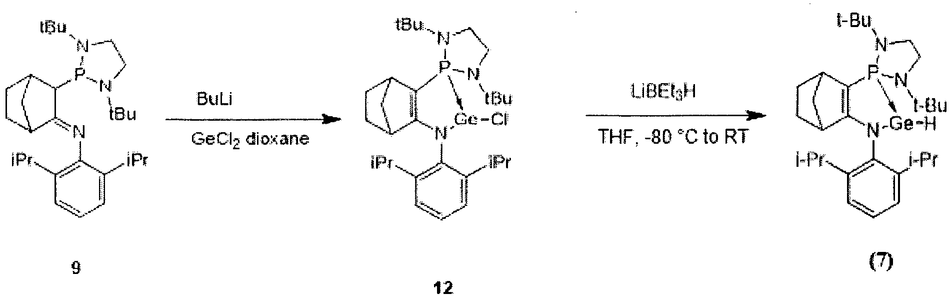

### 1 -b) Synthèse du composé intermédiaire 4 :

Dans un ballon bicol de 500 mL équipé d'un DeanStark et d'un réfrigérant sont ajoutés le norcamphore **1** (30 g, 0.3 mol), la diisopropylaniline (57 mL, 0.3 mol), une quantité catalytique d'acide para-toluene sulfonique (0.58 g, 3 mmol), et du toluene (150 mL). Le mélange est chauffé à reflux durant 3 jours à 135°C. Le solvant est évaporé et le résidu huileux est repris dans l'acétone et filtré pour éliminer le peu de solide formé. La solution est alors cristallisée par évaporation lente du pentane à température ambiante. Le produit **4** est obtenu sous forme de cristaux transparents après 2 jours (60g, 74%).
**¹H NMR** (300 MHz, C₆D₆, ppm) δ = 1.09 (d, *J*_{HH} = 6.8 Hz, 3H, CH_{3i-Pr}), 1.10 (d, *J*_{HH} = 6.7 Hz, 3H, CH_{3i-Pr}), 1.12 (d, *J*_{HH} = 6.3 Hz, 3H, CH_{3i-Pr}), 1.13 (d, *J*_{HH} = 6.9 Hz, 3H, CH_{3i-Pr}), 1.21-1.89 (m, 8H, CH₂), 2,44 (m, 1H, CH_{tdp}), 2.75 (sept, *J*_{HH} = 6.8 Hz, 1H, CH_{i-Pr}), 2.82 (sept, *J*_{HH} = 6.8 Hz, 1H, CH_{i-Pr}), 2.98 (m, 1H, CH_{tdp}), 7.03 (m, 3H, CHₐᵣ) ; **¹³C{1H}** (75 MHz, C₆D₆, ppm) δ = 22.7 (s, CH_{3i-Pr}), 22.9 (s, CH_{3i-Pr}), 23.4 (s, CH_{3i-Pr}), 23.6 (s, CH_{3i-Pr}), 26.5 (s, CH₂), 27.6 (s, CH₂), 27.7 (s, CH_{i-Pr}), 28.0 (s, CH_{i-Pr}), 35.9 (s, CH_{tdp}), 38.2 (s, CH₂), 38.8 (s, CH₂), 47.0 (s, CH_{tdp}), 123.0 (s, CHₐᵣ), 123.1 (s, CHₐᵣ), 123.4 (s, CHₐᵣ), 135.8 (s, Cₐᵣ), 136.2 (s, Cₐᵣ), 147.0 (s, Cₐᵣ), 179.9 (s, C=N).

### 1-c) Synthèse du composé intermédiaire 7 :

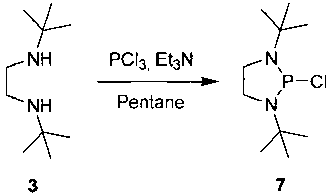

A une solution de PCl₃ (3 mL, 34 mmol) dans le toluene (20 mL) refroidie à 0°C est ajoutée une solution de diamine **3** (5.93 g, 34 mmol) et de triethylamine (9.62 ml, 70 mmol) dans 10 mL de toluène. Le mélange est ensuite agité durant le weekend à température ambiante. Après filtration et extraction au pentane (2x20 mL), les filtrats sont rassemblés et séchés, pour donner le produit **7** sous la forme d'une poudre blanche (6.5 g, 81%).
**¹H-NMR** (300 MHz, C₆D₆, 25 °C) δ = 1.24 (d, *J*_{HH} = 2.11 Hz, 12H, CH₃), 2,84 (d, *J*_{PH} = 6.65 Hz, 2H, CH₂), 3.08 (s, 2H, CH₂); **³¹P{¹H}-NMR** (75 MHz, C₆D₆, 25 °C) δ = 168.22

### 1-d) Synthèse du composé intermédiaire 9 :

A une solution d'imine **4** (8.08 g, 30 mmol) dans 35 ml de THF refroidie à -78°C est ajouté le nBuLi (1.6 M, 20 mL, 31 mmol) goutte à goutte sous vive agitation. Le mélange lithié est ensuite agité 1h à température ambiante avant d'être de nouveau refroidi à -78°C. La chlorophosphine **7** (5.38 g, 30 mmol) est alors ajoutée goutte à goutte, puis le mélange est agité à température ambiante. Une fois le solvant évaporé, le solide est extrait au pentane (50 mL) et à l'éther (50 mL) et séché. Le produit est alors lavé à l'acétonitrile (3X30 mL), et séché de nouveau pour donner le produit **9** sous la forme d'une poudre blanche (20.2 g, 76%).
**¹H-NMR** (300 MHz, C₆D₆, 25 °C) δ = 1.05 (m, 1H, CH₂), 1.17 (s, 9H, CH_{3tBu}), 1.22 (m, 3H, CH₂), 1.25 (d, *J*_{HH} = 6.8 Hz, 3H, CH_{3iPr}), 1.28 (d, *J*_{HH} = 6.8 Hz, 6H, CH_{3iPr}), 1.32 (d, *J*_{HH} = 6.8 Hz, 3H, CH_{3iPr}), 1.38 (s, 9H, CH_{3tBu}), 1.54 (m, 1H, CH₂), 1.8 (d, *J*_{HH} = 9.8 Hz, 1H, PCH), 2.34 (d, *J*_{PH} = 3.5 Hz, 1H, CH_{bridgehead}), 2.61 (d, *J*_{PH} = 3 Hz, 1H, CH_{bridgehead}), 2.75 (m, 2H, NCH₂), 2.87 (m, 1H, CH₂), 2.9 (m, 1H, CH₂), 3.0 (m, 1H, CH₂), 3.05 (sept., *J*_{HH}= 6.8Hz, 1H, CH_{*i*Pr}), 3.46 (sept., *J*_{HH}= 6.8Hz, 1H, CH_{*i*Pr}), 7.07-7.23 (m, 3H, CH_{Ar}); **³¹P{¹H}-NMR** (121 MHz, C₆D₆, 25 °C) δ = 90.45

### 1-e) Synthèse du composé intermédiaire 12 :

A une solution d'iminophosphine **9** (1.36 g, 2.89 mmol) dans 14 ml de THF refroidie à -78°C est ajouté le nBuLi (1.6 M, 1.82 mL, 2.9 mmol) goutte à goutte sous vive agitation. Le mélange lithié est ensuite agité 1h à température ambiante avant d'être de nouveau refroidi à -78°C. Une solution de dichlorogermylene dioxane (0.68 g, 3 mmol) dans le THF (8 mL) est alors ajoutée goutte à goutte, puis le mélange est agité à température ambiante. Une fois le solvant évaporé, le solide est extrait au pentane (30 mL) et à l'éther (30 mL) puis le mélange est concentré. Le produit **12** est obtenu sous la forme de cristaux jaunes (1.16 g, 70%, mélange de deux isomères) après cristallisation à -30°C.

### Isomère majoritaire 12 (60 %)

**¹H-NMR** (499.9 MHz, C₆D₆, 25 °C) δ = 1.13 (m, 1H, CH_{2bridge}), 1.18 (s, 9H, CH_{3tBu}), 1.22 (d, *J*_{HH} = 6.8Hz, 3H, CH_{3iPr}), 1.25 (d, *J*_{HH} = 6.8Hz, 3H, CH_{3iPr}), 1.26 (m, 2H, CH₂), 1.37 (d, *J*_{HH} = 6.8Hz, 3H, CH_{3iPr}), 1.44 (9, 9H, CH_{3tBu}), 1.55 (m, 2H, CH₂), 1.58 (d, *J*_{HH} = 6.8Hz, 3H, CH_{3iPr}), 1.68 (m, 1H, CH_{2bridge}), 2.5 (m, 1H, CH_{bridgehead}), 2.6 (m, 2H, CH₂), 2.7 (m, 2H, CH₂), 2.96 (m, 1H, CH_{bridgehead}), 3.47 (sept., *J*_{HH} = 6.8Hz, 1H, CH_{*i*Pr}), 3.65 (sept., *J*_{HH} = 6.8 Hz, 1H, CH_{*i*Pr}), 7.1-7.26 (m, 3H, CH_{Ar}); **¹³C{¹H}-NMR** (125.7 MHz, C₆D₆, 25 °C) δ = 24.7 (s, CH_{3iPr}), 24.9 (s, CH_{3*i*Pr}), 25 (d, *J*_{PC} = 1.6 Hz, CH₂), 25.9 (s, CH_{3*i*Pr}), 26.3 (s, CH_{3*i*Pr}), 27.84 (s, CH_{*i*Pr}), 28.45 (s, CH_{*i*Pr}), 29.2 (d, J_{PC} = 0.9 Hz, CH₂), 29.9 (d, *J*_{PC} = 1.1 Hz, CH_{3tBu}), 30 (d, *J*_{PC} = 3 Hz, CH_{3tBu}), 41.4 (d, *J*_{PC} = 7.9 Hz, CH_{bridgehead}), 43.1 (s, CH₂), 43.2 (s, CH₂), 44.1 (d, *J*_{PC} = 14.5 Hz, CH_{bridgehead}), 46.9 (d, *J*_{PC} = 4.1 Hz, CH₂), 53.26 (d, *J*_{PC} = 7.2 Hz, C_{*t*Bu}), 54.1 (d, *J*_{PC} = 7.8 Hz, C_{*t*Bu}), 94.7 (d, *J*_{PC} = 26.4 Hz, PC), 124.1 (s, CH_{Ar}), 124.5 (s, CH_{Ar}), 126.9 (s, CH_{Ar}), 139.8 (d, *J*_{PC} = 3.8 Hz, NC_{Ar}), 145.8 (s, C_{Ar}), 147.7 (s, C_{Ar}), 184.6 (d, *J*_{PC} = 43.4Hz, NC).

**³¹P{¹H}-NMR** (202.3 MHz, C₆D₆, 25 °C) δ = 71.8 (s).

### Isomère minoritaire 12'(40 %)

**¹H-NMR** (499.9 MHz, C₆D₆, 25 °C) δ = 1.11 (m, 1H, CH_{2bridge}), 1.13 (m, 2H, CH₂), 1.2 (d, *J*_{HH} = 6.8Hz, 3H, CH_{3iPr}), 1.23 (s, 9H, CH_{3tBu}), 1.27 (d, *J*_{HH} = 6.8Hz, 3H, CH_{3iPr}), 1.31 (d, *J*_{HH} = 6.8Hz, 3H, CH_{3iPr}), 1.4 (m, 2H, CH₂), 1.45 (9, 9H, CH_{3tBu}), 1.6 (d, *J*_{HH}= 6.8Hz, 3H, CH_{3iPr}), 1.65 (m, 1H, CH_{2bridge}), 2.5 (m, 1H, CH_{bridgehead}), 2.6 (m, 2H, CH₂), 2.7 (m, 2H, CH₂), 2.96 (m, 1H, CH_{bridgehead}), 3.18 (sept., *J*_{HH} = 6.8Hz, 1H, CH_{*i*Pr}), 3.99 (sept., *J*_{HH} = 6.8 Hz, 1H, CH_{*i*Pr}), 7.1-7.26 (m, 3H, CH_{Ar}); **¹³C{¹H}-NMR** (125.7 MHz, C₆D₆, 25 °C) δ = 24.1 (s, CH_{3*i*Pr}), 25.4 (s, CH_{3*i*Pr}), 25.4 (d, *J*_{PC} = 1.6 Hz, CH₂), 25.8 (s, CH_{3iPr}), 26.6 (s, CH_{3*i*Pr}), 27.7 (s, CH_{*i*Pr}), 28.5 (s, CH_{*i*Pr}), 28.7 (d, *J*_{PC} = 1.2 Hz, CH₂), 29.4 (d, *J*_{PC} = 3.8 Hz, CH_{3tBu}), 30.5 (d, *J*_{PC} = 1 Hz, CH_{3tBu}), 42.3 (d, *J*_{PC} = 7.9 Hz, CH_{bridgehead}), 43.5 (d, *J*_{PC} = 2.4 Hz, CH₂), 43.7 (s, CH₂), 44.1 (d, *J*_{PC} = 14.5 Hz, CH_{bridgehead}), 48.9 (d, *J*_{PC} = 5.7 Hz, CH₂), 53.5 (d, *J*_{PC} = 5 Hz, C_{tBu}), 53.8 (d, *J*_{PC} = 9 Hz, C_{*t*Bu}), 98 (d, *J*_{PC} = 22.9 Hz, PC), 124 (s, CH_{Ar}), 124.6 (s, CH_{Ar}), 127 (s, CH_{Ar}), 130.1 (d, *J*_{PC} = 6.3 Hz, NC_{Ar}), 146.2 (s, C_{Ar}), 148.2 (s, C_{Ar}), 183.8 (d, *J*_{PC} = 40 Hz, NC).

**³¹P{¹H}-NMR** (202.3 MHz, C₆D₆, 25 °C) δ = 74.8 (s).

### 1-f) Synthèse du composé organique (7)

A une solution de chlorogermylène **12** (680 mg, 1.18 mmol) dans 4 ml de THF refroidie à - 78°C est ajouté une solution de LiBEt₃H (1.0 M, 1.5 mL, 1.5 mmol) et le mélange est agité à - 78°C pendant 30 min, puis à température ambiante pendant 30 min. Une fois les différents composés volatiles évaporés, le solide est extrait au pentane (10 mL) et à l'éther (10 mL) puis séché. Le composé organique (7) est obtenu sous la forme de cristaux jaunes (540 mg, 85%) après cristallisation dans le pentane à -30°C.

### Exemple 2 : Préparation du composé organique (8) selon l'invention:

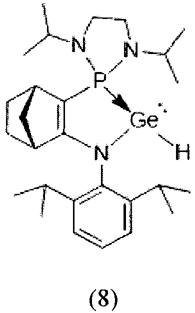

### 2-a) Schéma réactionnel

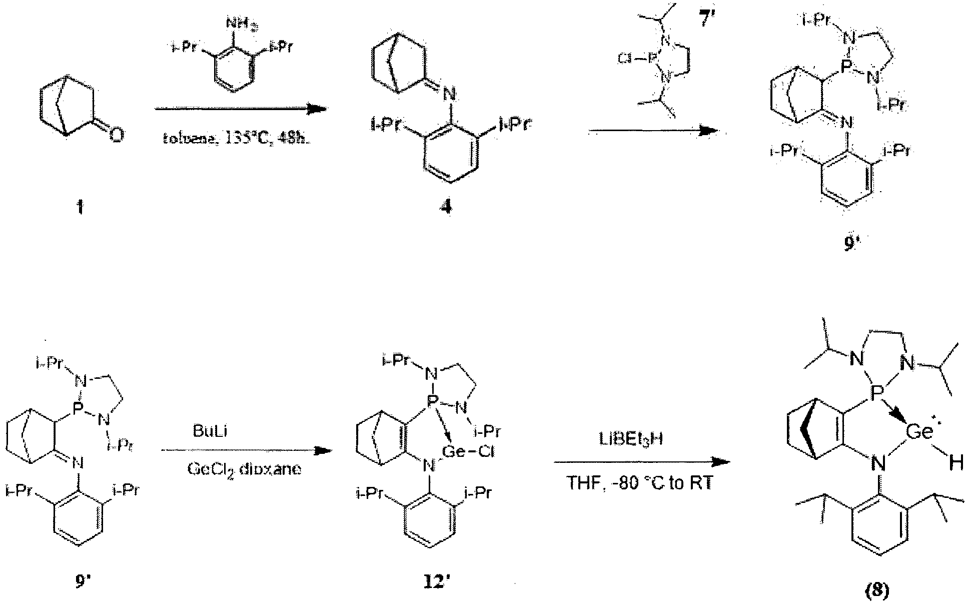

### 2-b) Synthèse du composé intermédiaire 4 :

### Voir exemple 1-b).

### 2-c) Synthèse du composé intermédiaire 7' :

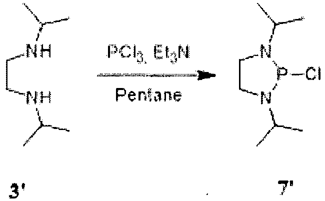

A une solution de diamine **3'** (14.4 g, 0.10 mol) et de triéthylamine (70 mL, 0.50 mol) dans 60 mL de THF refroidie à 0°C est ajoutée la trichlorophosphine PCl₃ (8.75 mL, 0.10 mol). Le mélange est ensuite agité pendant 20h à température ambiante. Le produit **7'** est extrait par filtration et extraction au pentane (100 mL) avant d'être obtenu par distillation sous la forme d'une huile incolore (12.3 g, 60%).
**¹H-NMR** (300 MHz, C₆D₆, 25 °C) δ = 0.90 (d, *J*_{HH} = 3.4 Hz, 12H, CH₃), 2,87 (b, 2H, CH), 2.97 (m, 4H, CH₂); **¹³C{¹H}-NMR** (75 MHz, C₆D₆, 25 °C) δ = 21,4 (s, CH₃), 22,0 (s, CH₃), 46,7 (d, *J*_{PC} = 10.4 Hz, CH₂), 48.0 (d, *J*_{PC} = 14.9 Hz, CH); **³¹P{¹H}-NMR** (75 MHz, C₆D₆, 25 °C) δ = 160.8.

### 2-d) Synthèse du composé intermédiaire 9' :

A une solution d'imine **4** (16.03 g, 59.5 mmol) dans 70 ml de THF refroidie à -78°C est ajouté le nBuLi (1.6 M, 39 mL, 62.5 mmol) goutte à goutte sous vive agitation. Le mélange lithié est ensuite agité 1h à température ambiante avant d'être de nouveau refroidi à -78°C. La chlorophosphine (12.3 g, 59.5 mmol) est alors ajoutée goutte à goutte, puis le mélange est agité à température ambiante pendant 2h. Une fois le solvant évaporé, le solide lavé à l'acétonitrile (3x80 mL), séché, puis dissout dans le pentane et filtré. Une fois le solvant évaporé, le produit est obtenu sous la forme d'une poudre blanche (20.2 g, 76%).
**¹H-NMR** (300 MHz, C₆D₆, 25 °C) δ = 1.03 (d, *J*_{HH} = 2.1 Hz, 3H, CH_{3i-Pr}), 1.06 (b, 9H, CH_{3i-Pr}), 1.11 (b, 9H, CH_{3i-Pr}), 1.15 (d, *J*_{HH} = 1.8 Hz, 3H, CH_{3i-Pr}), 1.22 (m, 2H, CH₂), 1.32 (m, 2H, CH₂), 1.68 (m, 2H, CH₂), 2.16 (d, *J*_{HH} = 3.6 Hz, 1H, PCH), 2.46 (d, *J*_{HH} = 9.6 Hz, 1H, CH_{bridgehead}), 2.56 (m, 1H, CH_{bridgehead}), 2.79 (sept, *J*_{HH} = 9.6 Hz, 1H, CH_{i-Pr}), 2.91 (m, 1H, CH_{i-Pr}), 3.02 (m, 3H, NCH₂, CH_{i-Pr}), 3.20 (m, 2H, NCH₂), 3.41 (m, 1H, CH_{i-Pr}), 6.90-7.05 (m, 3H, CH_{Ar}); **¹³C{¹H}-NMR** (75 MHz, C₆D₆, 25 °C) δ = 22.0 (d, *J*_{PC} = 6.7 Hz, CH_{3i-Pr}), 22.2 (d, *J*_{PC} = 6.5 Hz, CH_{3i-Pr}), 22.2 (s, CH_{3i-Pr}), 22.4 (d, *J*_{PC} = 7.3 Hz, CH_{3i-Pr}), 22.8 (d, *J*_{PC} = 13.8 Hz, CH_{3i-Pr}), 23.0 (s, CH_{3i-Pr}), 24.3 (s, CH_{3i- Pr}), 24.7 (s, CH_{3i-Pr}), 25.2 (d, *J*_{PC} = 1.5 Hz, CH₂), 27.5 (d, *J*_{PC} = 3.4 Hz, CH_{i-Pr}), 28.3 (s, CH_{i-Pr}), 29.2 (d, *J*_{PC} = 1.2 Hz, CH₂), 35.9 (d, *J*_{PC} = 4.2 Hz, CH₂), 39.4 (d, *J*_{PC} = 4.7 Hz, CH_{i-Pr}), 42.2 (s, CH_{i-Pr}), 45.6 (d, *J*_{PC} = 8.8 Hz, CH₂), 48.2 (d, *J*_{PC} = 7.2 Hz, CH₂), 49.0 (d, *J*_{PC} = 20.7 Hz, CH_{bridgehead}), 52.2 (d, *J*_{PC} = 26.0 Hz, CH_{bridgehead}), 55.6 (d, *J*_{PC} = 42.1 Hz, PCH), 122.6 (s, CH_{Ar}), 123.1 (s, CH_{Ar}), 123.2 (s, CH_{Ar}),136.2 (d, *J*_{PC} = 1.7 Hz, C_{Ar}), 136.8 (d, *J*_{PC} = 1.3 Hz, C_{Ar}), 147.9 (d, *J*_{PC} = 1.4 Hz, C_{Ar}), 180.4 (d, *J*_{PC} = 8.0 Hz, N=C); **³¹P{¹H}-NMR** (121 MHz, C₆D₆, 25 °C) δ = 104.7.

### 2-e) Synthèse du composé intermédiaire 12' :

A une solution d'iminophosphine **9'** (3.0 g, 6.79 mmol) dans 20 ml de THF refroidie à -78°C est ajouté le nBuLi (1.6 M, 4.4 mL, 7.1 mmol) goutte à goutte sous vive agitation. Le mélange lithié est ensuite agité 1h à température ambiante avant d'être de nouveau refroidi à -78°C. Une solution de dichlorogermylene dioxane (1.6 g, 6.8 mmol) dans le THF (10 mL) est alors ajoutée goutte à goutte, puis le mélange est agité à température ambiante pendant 2h. Une fois le solvant évaporé, le solide est extrait au toluene (40 mL) puis séché de nouveau. Le produit **12'** est obtenu sous la forme d'une poudre jaune (mélange de 2 isomères) après lavage au pentane (2x20 mL) et évaporation du solvant (3.5 g, 94%).

### Isomer 1 (45%)

**¹H-NMR** (300 MHz, C₆D₆, 25 °C) δ = 0.91 (d, *J*_{HH} = 6.8 Hz, 3H, CH_{3i-Pr}), 0.93 (d, *J*_{HH} = 6.1 Hz, 3H, CH_{3i-Pr}), 1.01 (d, *J*_{HH} = 7.0 Hz, 3H, CH_{3i-Pr}), 1.19 (d, *J*_{HH} = 7.1 Hz, 3H, CH_{3i-Pr}), 1.20 (m, 1H, CH₂), 1.26 (d, *J*_{HH} = 7.4 Hz, 3H, CH_{3i-Pr}), 1.27 (d, *J*_{HH} = 7.1 Hz, 3H, CH_{3i-Pr}), 1.29 (d, *J*_{HH} = 5.8 Hz, 3H, CH_{3i-Pr}), 1.35 (b, 1H, CH₂), 1.50 (b, 2H, CH₂), 1.53(d, *J*_{HH} = 6.1 Hz, 3H, CH_{3i-Pr}), 1.68 (b, 1H, CH₂), 1.73 (b, 1H, CH₂), 2.32 (b, 1H, PCCH_{tdp}), 2.42-2.70 (m, 4H, NCH₂), 2.73 (b, 1H, NCCH_{tdp}), 3.14 (sept, *J*_{HH} = 6.9 Hz, 1H, CH_{i-Pr}), 3.24 (m, 1H, CH_{i-Pr}), 3.70 (sept, *J*_{HH} = 6.8 Hz, 1H, CH_{i-Pr}), 4.05 (m, 1H, CH_{i-Pr}), 7.07-7.22 (m, 3H, CH_{Ar}); **¹³C{¹H}-NMR** (75 MHz, C₆D₆, 25 °C) δ = 20.3 (d, *J*_{PC} = 2.1 Hz, CH_{3i-Pr}), 20.7 (s, CH_{3i-Pr}), 21.1 (d, *J*_{PC} = 5.4 Hz, CH_{3i-Pr}), 22.2 (d, *J*_{PC} = 4.3 Hz, CH_{3i-Pr}), 24.0 (s, CH_{3i-Pr}), 24.6 (s, CH_{3i-Pr}), 25.5 (s, CH₂), 25.9 (s, CH_{3i-Pr}), 26.2 (s, CH_{3i-Pr}), 27.8 (s, CH_{i-Pr}), 28.8 (s, CH_{i-Pr}), 29.6 (d, *J*_{PC} = 0.8 Hz, CH₂), 38.7 (s, CH₂), 39.3 (d, *J*_{PC} = 1.9 Hz, CH₂), 40.5 (d, *J*_{PC} = 8.0 Hz, CH_{tdp}), 43.4 (d, *J*_{PC} = 14.2 Hz, CH_{tdp}), 44.4 (d, *J*_{PC} = 9.7 Hz, CH_{i-Pr}), 45.0 (d, *J*_{PC} = 1.75 Hz, CH_{i-Pr}), 48.8 (d, *J*_{PC} = 3.1 Hz, CH₂), 91.8 (d, *J*_{PC} = 21.6 Hz, PC), 123.8 (s, CH_{Ar}), 124.5 (s, CH_{Ar}), 126.6 (s, CH_{Ar}), 140.3 (d, *J*_{PC} = 5.7 Hz, C_{Ar}), 146.3 (s, C_{Ar}), 147.6 (s, C_{Ar}), 191.1 (d, *J*_{PC} = 42.4 Hz, NC); **³¹P{¹H}-NMR** (121 MHz, C₆D₆, 25 °C) δ = 71.3.

### Isomer 2 (55%)

**¹H-NMR** (300 MHz, C₆D₆, 25 °C) δ = 0.98 (d, *J*_{HH} = 6.5 Hz, 3H, CH_{3i-Pr}), 1.00 (d, *J*_{HH} = 7.1 Hz, 3H, CH_{3i-Pr}), 1.04 (d, *J*_{HH} = 7.1 Hz, 3H, CH_{3i-Pr}), 1.18 (m, 1H, CH₂), 1.21 (d, *J*_{HH} = 6.8 Hz, 3H, CH_{3i-Pr}), 1.24 (d, *J*_{HH} = 7.1 Hz, 3H, CH_{3i-Pr}), 1.31 (d, *J*_{HH} = 6.5 Hz, 3H, CH_{3i-Pr}), 1.34 (d, *J*_{HH} = 7.1 Hz, 3H, CH_{3i-Pr}), 1.38 (b, 1H, CH₂), 1.40 (b, 1H, CH₂), 1.50 (d, *J*_{HH} = 6.7 Hz, 3H, CH_{3i-Pr}), 1.52 (b, 1H, CH₂), 1.62 (b, 1H, CH₂), 1.68 (b, 1H, CH₂), 2.42-2.70 (m, 4H, CH₂), 2.60 (b, 1H, PCCH_{tdp}), 2.88 (b, 1H, NCCH_{tdp}), 3.26 (sept, *J*_{HH} = 6.7 Hz, 1H, CH_{i-Pr}), 3.47 (m, 1H, CH_{i-Pr}), 3.99 (sept, *J*_{HH} = 6.9 Hz, 1H, CH_{i-PR}), 4.21 (m, 1H, CH_{i-Pr}), 7.07-7.22 (m, 3H, CH_{Ar}); **¹³C{¹H}-NMR** (75 MHz, C₆D₆, 25 °C) δ = 20.4 (d, *J*_{PC} = 0.7 Hz, CH_{3i-Pr}), 21.0 (d, *J*_{PC} = 2.3 Hz, CH_{3i-Pr}), 21.3 (d, *J*_{PC} = 5.6 Hz, CH_{3i-Pr}), 22.0 (d, *J*_{PC} = 6.9 Hz, CH_{3i-Pr}), 24.2 (s, CH_{3i-Pr}), 24.4 (s, CH_{3i-Pr}), 25.4 (s, CH_{3i-Pr}), 25.5 (s, CH₂), 26.1 (d, *J*_{PC} = 2.0 Hz, CH_{3i-Pr}), 27.9 (s, CH_{i-Pr}), 28.7 (s, CH_{i-Pr}), 29.6 (d, *J*_{PC} = 1.2 Hz, CH₂), 38.7 (s, CH₂), 39.4 (d, *J*_{PC} = 2.8 Hz, CH₂), 40.9 (d, *J*_{PC} = 8.5 Hz, CH_{tdp}), 44.2 (d, *J*_{PC} = 13.4 Hz, CH_{tdp}), 44.8 (d, *J*_{PC} = 3.4 Hz, CH_{i-Pr}), 45.2 (d, *J*_{PC} = 9.0 Hz, CH_{i-Pr}), 46.8 (d, *J*_{PC} = 4.7 Hz, CH₂), 89.7 (d, *J*_{PC} = 25.2 Hz, PC), 123.3 (s, CH_{Ar}), 124.3 (s, CH_{Ar}), 126.6 (s, CH_{Ar}), 139.5 (d, *J*_{PC} = 4.1 Hz, C_{Ar}), 145.5 (s, C_{Ar}), 147.6 (s, C_{Ar}), 190.5 (d, *J*_{PC} = 41.1 Hz, NC); **³¹P{¹H}-NMR** (121 MHz, C₆D₆, 25 °C) δ = 65.2.

### 2-f) Synthèse du composé organique (8) :

Le même protocole que décrit dans l'exemple 1-f) est utilisé pour préparer le composé organique (8) à partir du composé intermédiaire **12'.**

### Exemple 3 : Préparation du composé organique (9) selon l'invention:

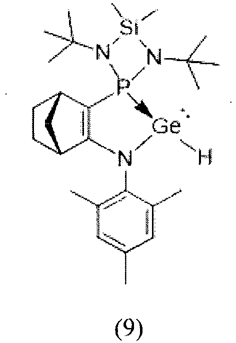

### 3-a) Schéma réactionnel

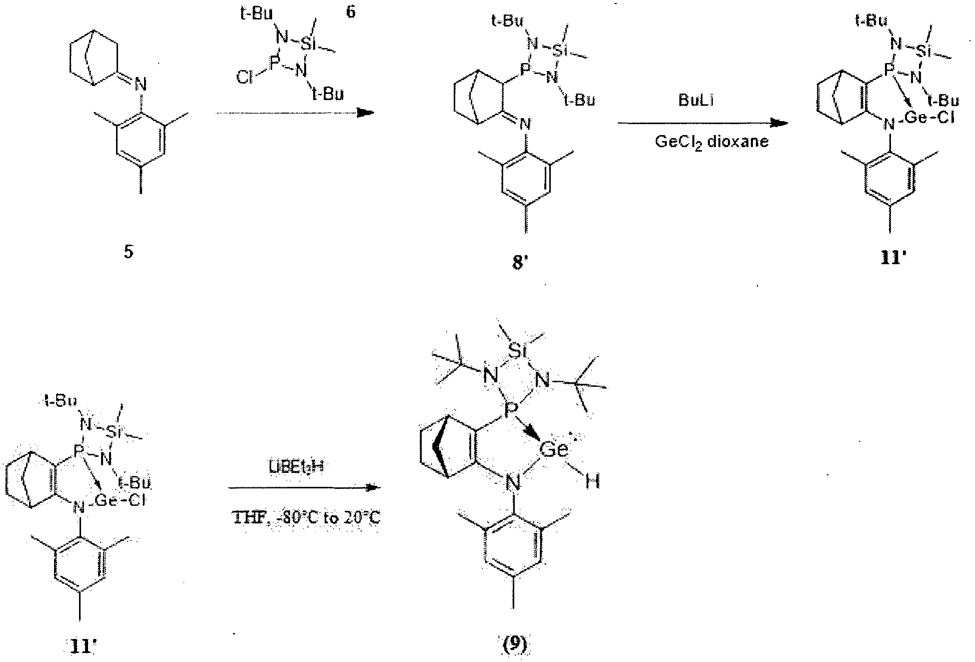

### 3b) Synthèse du composé intermédiaire 8' :

A une solution de mesitylimine **5** (11.7 g, 51.46 mmol, préparée suivant l'exemple 5-b) décrit ci-après) dans 70 ml de THF refroidie à -78°C est ajouté le nBuLi (1.6 M, 34 mL, 54 mmol) goutte à goutte sous vive agitation. Le mélange lithié est ensuite agité 1h à température ambiante avant d'être de nouveau refroidi à -78°C. La chlorophosphine **6** (12.5 g, 46.8 mmol) est alors ajoutée goutte à goutte, puis le mélange est agité à température ambiante. Une fois le solvant évaporé, le solide est lavé à l'acétonitrile (3X80 mL), puis repris dans le pentane, filtré et séché pour donner le produit **8'** sous la forme d'une poudre blanche (19.7 g, 92%).

**¹H-NMR** (300 MHz, C₆D₆, 25 °C) δ = 0.37 (s, 3H, CH_{3Si}), 0.41 (s, 3H, CH_{3Si}), 1.00-1.05 (m, 1H, CH₂), 1.21 (s, 9H, CH_{3t-Bu}), 1.28-1.32 (m, 3H, CH₂), 1.37 (s, 9H, CH_{3t-Bu}), 1.60 (m, 1H, CH₂), 1.72-1.75 (m, 1H, CH₂), 2.21 (s, 9H, CH₃), 2.47 (m, 1H, PCCH_{bridgehead}), 2.57 (d, *J*_{PH} = 3.6 Hz, 1H, PCH), 3,04 (m, 1H, NCCH_{bridgehead}), 6,83 (s, 2H, CH_{Ar}); **¹³C{¹H}-NMR** (75 MHz, C₆D₆, 25 °C) δ = 7.0 (s, CH_{3Si}), 7.2 (d, *J*_{PC} = 2.0 Hz, CH_{3Si}), 20.6 (s, 3C, CH₃), 25.6 (s, CH₂), 30.3 (s, CH₂), 32.2 (d, *J*_{PC} = 6.2 Hz, 3C, CH_{3t-Bu}), 32.3 (d, *J*_{PC} = 7.5 Hz, 3C, CH_{3t-Bu}), 37.0 (s, CH₂), 39.7 (s, NCCH_{bridgehead}), 42.1 (s, PCCH_{bridgehead}) 50.8 (d, *J*_{PC} = 15.8 Hz, C_{t-Bu}), 51.4 (d, *J*_{PC} = 8.3 Hz, C_{t-Bu}), 66.5 (d, *J*_{PC} = 60.1 Hz, PCH), 128.6 (s, 2C, CH_{Ar}), 130.9 (s, 2C, C_{Ar}), 148.3 (s, C_{Ar}), 148.3 (s, C_{Ar}), 180.5 (d, *J*_{PC} = 9.4 Hz, N=C); **³¹P{¹H}-NMR** (121 MHz, C₆D₆, 25 °C) δ = 146.5; **²⁹Si{¹H}-NMR** (59 MHz, C₆D₆, 25 °C) δ = 18.6 (d, *J*_{PSi} = 7.2 Hz).

### 3-c) Synthèse du composé intermédiaire 11' :

A une solution d'iminophosphine **8'** (4.5 g, 9.83 mmol) dans 25 ml de THF refroidie à -78°C est ajouté le nBuLi (1.6 M, 6.45 mL, 10.32 mmol) goutte à goutte sous vive agitation. Le mélange lithié est ensuite agité 1h à température ambiante avant d'être de nouveau refroidi à -78°C. Une solution de dichlorogermylene dioxane (2.28 g, 9.83 mmol) dans le THF (10 mL) est alors ajoutée goutte à goutte, puis le mélange est agité à température ambiante pendant 2h. Une fois le solvant évaporé, le solide est extrait au toluene (40 mL) et séché avant d'être lavé au pentane (2x20 mL). Une fois séché, le produit **11'** (mélange de deux isomères) est obtenu sous la forme d'une poudre blanche (3.7 g, 86%).

### Isomère 1 (78%)

**¹H-NMR** (300 MHz, C₆D₆, 25 °C) δ = 0.24 (s, 3H, CH_{3Si}), 0.28 (s, 3H, CH_{3Si}), 1.15 (d, *J*_{PH} = 0.6 Hz, 9H, CH_{3t-Bu}), 1.13-1.2 (m, 2H, CH₂), 1.37 (d, *J*_{PH} = 0.9 Hz, 9H, CH_{3t-Bu}), 1.57-1.71 (m, 3H, CH₂), 2.11 (m, 1H, CH₂), 2.17 (s, 3H, CH₃), 2.42 (s, 3H, CH₃), 2.53 (m, 1H, PCCH_{tdp}), 2.56 (s, 3H, CH₃), 3.02 (m, 1H, NCCH_{tdp}), 6.78-7.14 (s, 2H, CH_{Ar}); **¹³C(¹H}-NMR** (75 MHz, C₆D₆, 25 °C) δ = 4.02 (d, *J*_{PC} = 1.5 Hz, CH_{3Si}), 5.94 (d, *J*_{PC} = 4.8 Hz, CH_{3Si}), 20.09 (s, CH₃), 20.47 (d, *J*_{PC} = 2.5 Hz, CH₃), 21.03 (s, CH₃), 25.75 (s, CH₂), 29.49 (s, CH₂), 33.14 (d, *J*_{PC} = 3.3 Hz, 3C, CH_{3t-Bu}), 33.23 (d, *J*_{PC} = 4.4 Hz, 3C, CH_{3t-Bu}), 40.96 (d, *J*_{PC} = 7.2 Hz, CH_{bridgehead}), 44.32 (d, *J*_{PC} = 14.1 Hz, CH_{bridgehead}), 47.08 (d, *J*_{PC} = 4.2 Hz, CH₂), 51.30 (d, *J*_{PC} = 3.0 Hz, C_{t-Bu}), 51.87 (d, *J*_{PC} = 3.6 Hz, C_{t-Bu}), 99.25 (d, *J*_{PC} = 19.2 Hz, PC), 129.57 (s, CH_{Ar}), 130.05 (s, CH_{Ar}), 134.42 (s, C_{Ar}), 134.80 (s, 2C, C_{Ar}), 136.62 (s, C_{Ar}), 185.17 (d, *J*_{PC} = 42.0 Hz, NC); **³¹P{¹H}-NMR** (121 MHz, C₆D₆, 25 °C) δ = 83.02; **²⁹Si{¹H}-NMR** (59 MHz, C₆D₆, 25 °C) δ = 11.44 (d, *J*_{PSi} = 4.1 Hz).

### Isomère 2 (22%)

**¹H-NMR** (300 MHz, C₆D₆, 25 °C) δ = 0.25 (s, 3H, CH_{3Si}), 0.29 (s, 3H, CH_{3Si}), 1.20-1.25 (m, 2H, CH₂), 1.21 (d, *J*_{PH} = 0.3 Hz, 9H, CH_{3t-Bu}), 1.43 (d, *J*_{PH} = 0.6 Hz, 9H, CH_{3t-Bu}), 1.45-1.60 (m, 3H, CH₂), 2.11 (m, 1H, CH₂), 2.16 (s, 3H, CH₃), 2.29 (s, 3H, CH₃), 2.35 (m, 1H, PCCH_{tdp}), 2.65 (s, 3H, CH₃), 3.02 (m, 1H, NCCH_{tdp}), 6.78-7.14 (m, 2H, CH_{Ar}); **¹³C{¹H}-NMR** (75 MHz, C₆D₆, 25 °C) δ = 4.32 (d, *J*_{PC} = 1.7 Hz, CH_{3Si}), 5.86 (d, *J*_{PC} = 5.3 Hz, CH_{3Si}), 19.80 (d, *J*_{PC} = 1.0 Hz, CH₃), 20.23 (s, CH₃), 21.03 (s, CH₃), 25.67 (s, CH₂), 28.95 (s, CH₂), 32.90 (d, *J*_{PC} = 4.9 Hz, 3C, CH_{3t-Bu}), 33.48 (d, *J*_{PC} = 3.1 Hz, 3C, CH_{3t-Bu}), 40.96 (d, *J*_{PC} = 7.2 Hz, CH_{bridgehead}), 43.82 (d, *J*_{PC} = 14.0 Hz, CH_{bridgehead}), 49.41 (d, *J*_{PC} = 3.1 Hz, CH₂), 51.30 (d, *J*_{PC} = 3.0 Hz, C_{t-Bu}), 51.89 (d, *J*_{PC} = 2.4 Hz, C_{t-Bu}), 101.25 (d, *J*_{PC} = 18.8 Hz, PC), 129.17 (s, CH_{Ar}), 130.20 (s, CH_{Ar}), 135.04 (s, C_{Ar}), 135.18 (s, C_{Ar}), 136.83 (s, C_{Ar}), 140.54 (d, *J*_{PC} = 3.0 C_{Ar}), 184.46 (d, *J*_{PC} = 38.5 Hz, NC); **³¹P{¹H}-NMR** (121 MHz, C₆D₆, 25 °C) δ = 84.26; **²⁹Si{¹H}-NMR** (59 MHz, C₆D₆, 25 °C) δ = 11.07 (d, *J*_{PSi} = 4.1 Hz).

### 3-d) Synthèse du composé organique (9) :

Le composé organique (9) est préparé à partir du composé intermédiaire **11'** suivant le protocole décrit dans l'exemple 4-f).

### Exemple 4 : Préparation du composé organique (10) selon l'invention:

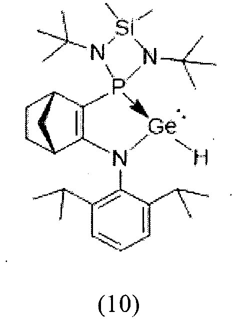

### 4-a) Schéma réactionnel

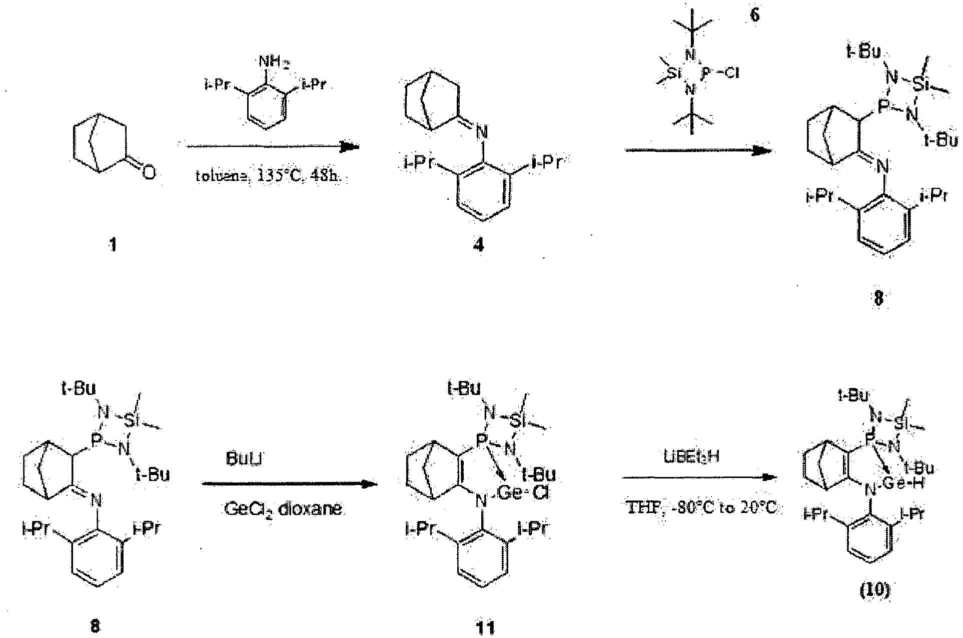

### 4-b) Synthèse du composé intermédiaire 4 :

Tel que décrit selon l'exemple 1-b).

### 4-c) Synthèse du composé intermédiaire 6 :

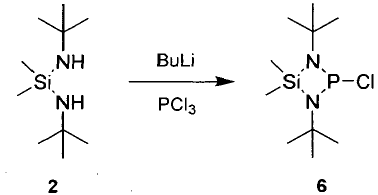

A une solution de Me₂Si(NH^{t}Bu)₂ 2 (7.38 g, 36.46 mmol) dans 40 ml de THF refroidie à -78°C est ajouté le n-BuLi (1.6M) (46.7 mL, 74.47 mmol), puis la solution est chauffée à 50°C durant 4H. Le mélange réactionnel est ensuite refroidi à -100°C et la PCl₃ (3.2 mL, 36.58 mmol) est ajoutée goutte à goutte. La réaction est gardée à -100°C pendant 2h avant de revenir doucement à température ambiante sur la nuit. Le solvant est alors évaporé et le produit extrait à l'aide de pentane (40 mL puis 2x20 mL). Après évaporation du pentane, le produit **6** est obtenu après distillation (7.0g, 72%) sous la forme d'une huile transparente.
**¹H NMR** (300 MHz, CDCl₃, ppm) δ = 0.45 (s, 6H, SiCH₃), 1.23 (d, *J*_{PH} = 1.3 Hz, 18H, CH_{3t-Bu}); **¹³C NMR{¹H}** (75 MHz, CDCl₃, ppm) δ = 5.2 (d, *J*_{PC} = 3.6 Hz, SiCH₃), 31.9 (d, *J*_{PC} = 7.8 Hz, CH_{3t-Bu}), 52.0 (d, *J*_{PC} = 7.8 Hz, C_{t-Bu}); **³¹P NMR {¹H}** (121 MHz, CDCl₃, ppm) δ = 212.3; **²⁹Si NMR {¹H}** (59 MHz, CDCl₃, ppm) δ = 27.2.

### 4-d) Synthèse du composé intermédiaire 8 :

A une solution d'imine **4** (10.0 g, 37.1 mmol) dans 80 ml de THF refroidie à -78°C est ajouté le nBuLi (1.6 M, 24.3 mL, 39 mmol) goutte à goutte sous vive agitation. Le mélange lithié est ensuite agité 1h à température ambiante avant d'être de nouveau refroidi à -78°C. La chlorophosphine **6** (9.9 g, 37.1 mmol) est alors ajoutée goutte à goutte, puis le mélange est agité à température ambiante. Une fois le solvant évaporé, le solide est lavé à l'acétonitrile (3X80 mL), puis repris dans le pentane, filtré et séché pour donner le produit **8** sous la forme d'une poudre blanche (17.4 g, 94%).
**¹H NMR** (300 MHz, C₆D₆, ppm) δ = 0.34 (s, 3H, SiCH₃), 0.42 (s, 3H, SiCH₃), 1.05 (m, 1H, CH2), 1.20 (m, 1H, CH₂), 1,22 (s, 9H, CH_{3t-Bu}), 1,27 (d, *J*_{HH} = 6.8 Hz, 3H, CH_{3i-Pr}), 1,32 (d, *J*_{HH} = 6.8 Hz, 3H, CH_{3i-Pr}), 1.38 (m, 2H, CH₂), 1,41 (s, 9H, CH_{3t-Bu}), 1.61 (m, 1H, CH₂), 1.75 (m, 1H, CH₂), 2.56 (d, *J*_{HH} = 3,6 Hz, 1H, CH_{bridgehead}), 2.62 (d, *J*_{HH} = 3,6 Hz, 1H, CH_{bridgehead}), 3.06 (m, 1H, CH), 3.09 (m, 1H, CH_{*i*Pr}), 3.45 (sept., JHH= 6.8Hz, 1H, CH_{*i*Pr}), 7.11-7.24 (m, 3H, CH_{Ar}); **¹³C{1H}** (75 MHz, C₆D₆, ppm) δ = 7,2 (s,SiCH₃), 7,5 (d, *J*_{PC} = 1.7 Hz,SiCH₃), 22,3 (s, CH_{3i-Pr}), 23.1 (s, CH_{3i-Pr}), 24.5 (s, CH_{i-Pr}), 24.9 (s, CH_{3i-Pr}), 25.1 (s, CH₂), 27,9 (d, *J*_{PC} = 3.6 CH_{i-Pr}), 28,5 (s, CH_{3i- Pr}), 30.5 (s, CH₂), 32,3 (d, *J*_{PC} = 5.9 Hz, CH_{3t-Bu}) 32.4 (d, *J*_{PC} = 7,4 Hz, CH_{3t-Bu}), 37.3(s, CH₂), 40.2 (s, CH_{bridgehead}), 42,1 (s, CH_{bridgehead}), 51,0 (d, *J*_{PC} = 15,7 Hz, C_{t-Bu}), 51,6 (d, *J*_{PC} = 8.0 Hz, C_{t-Bu}), 66,4 (d, *J*_{PC} = 59.8 Hz, PCH), 122,7 (s, CHₐᵣ), 123,2 (s, CHₐᵣ), 123,4 (s, CHₐᵣ), 136,7 (d, *J*_{PC} = 1.3 Hz, Cₐᵣ), 136,8 (d, *J*_{PC} = 0.9 Hz, Cₐᵣ), 148.0 (s, Cₐᵣ), 180.6 (d, *J*_{PC} = 10.3 Hz, C=N); **³¹PNMR {¹H}** (121 MHz, C₆D₆, ppm) δ = 147.3; **²⁹Si NMR {¹H} δ** = (59 MHz, C₆D₆, ppm) 19,1 (d, *J*_{Psi} = 3,7 Hz).

### 4-e) Synthèse de du composé intermédiaire 11 :

A une solution d'iminophosphine **8** (5.0 g, 10 mmol) dans 40 ml de THF refroidie à -78°C est ajouté le nBuLi (1.6 M, 6.9 mL, 11 mmol) goutte à goutte sous vive agitation. Le mélange lithié est ensuite agité 1h à température ambiante avant d'être de nouveau refroidi à -78°C. Une solution de dichlorogermylene dioxane (2.32 g, 10 mmol) dans le THF (10 mL) est alors ajoutée goutte à goutte, puis le mélange est agité à température ambiante. Une fois le solvant évaporé, le solide est extrait au toluene (40 mL) et séché avant d'être lavé au pentane (2X20 mL). Une fois séché, le produit 11 est obtenu sous la forme d'une poudre blanche (5.7 g, 94%, mélange de deux isomères).

### Isomère majoritaire LGeCl (64 %) :

**¹H-NMR** (300 MHz, C₆D₆, 25 °C) δ = 0.22 (s, 3H, SiCH₃), 0.27 (s, 3H, SiCH₃), 1.17 (s, 9H, CH_{3*t*Bu}), 1.19 (d, *J*_{HH} = 9.1 Hz, 1H, CH₂), 1.24 (d, *J*_{HH} = 6.7 Hz, 3H, CH_{3*i*Pr}), 1.29 (d, *J*_{HH} = 6.7 Hz, 3H, CH_{3*i*Pr}), 1.29 (d, *J*_{HH} = 7.1 Hz, 1H, CH₂), 1.33 (d, *J*_{HH} = 7.1 Hz, 1H, CH₂), 1.38 (d, *J*_{HH} = 6.7 Hz, 3H, CH_{3*i*Pr}), 1.39 (s, 9H, CH_{3*t*Bu}), 1.60 (d, *J*_{HH} = 6.0 Hz, 3H, CH_{3*i*Pr}), 1.64 (m, 2H, CH₂), 1.67 (d, *J*_{HH} = 9.1 Hz, 1H, CH₂), 2.58 (b, 1H, CH_{bridgehead}), 3.05 (b, 1H, CH_{bridgehead}), 3.47 (sept., *J*_{HH} = 6.9 Hz, 1H, CH_{*i*Pr}), 3.68 (sept., *J*_{HH} = 6.9 Hz, 1H, CH_{*i*Pr}), 7.13-7.23 (m, 3H, CH_{Ar}); **¹³C{¹H}-NMR** (75 MHz, C₆D₆, 25 °C) δ = 3.6 (d, *J*_{PC} = 1.3 Hz, SiCH₃), 5.5 (d, *J*_{PC} = 5.0 Hz, SiCH₃), 24.3 (s, CH_{3*i*Pr}), 24.6 (s, CH_{3*i*Pr}), 25.2 (d, *J*_{PC} = 1.3 Hz, CH₂), 25.5 (s, CH_{3*i*Pr}), 26.1 (d, *J*_{PC} = 2.1 Hz, CH_{3*i*Pr}), 27.7 (s, CH_{*i*Pr}), 28.4 (s, CH_{*i*Pr}), 29.0 (d, *J*_{PC} = 1.5 Hz, CH₂), 32.7 (d, *J*_{PC} = 3.0 Hz, CH_{3*t*Bu}), 32.8 (d, *J*_{PC} = 4.2 Hz, CH_{3*t*Bu}), 40.6 (d, *J*_{PC} = 7.0 Hz, CH_{bridgehead}), 43.8 (d, *J*_{PC} = 14 Hz, CH_{bridgehead}), 46.5 (d, *J*_{PC} = 5.2 Hz, CH₂), 51.0 (d, *J*_{PC} = 2.9 Hz, C_{*t*Bu}), 51.5 (d, *J*_{PC} = 3.0 Hz, C_{*t*Bu}), 98.9 (d, *J*_{PC} = 21 Hz, PC), 123.7 (s, CH_{Ar}), 124.2 (s, CH_{Ar}), 126.7 (s, CH_{Ar}), 139.1 (d, *J*_{PC} = 3.9 Hz, C_{Ar}), 145.5 (s, C_{Ar}), 147.5 (s, C_{Ar}), 184.6 (d, *J*_{PC} = 42 Hz, NC); **³¹P{¹H}-NMR** (121 MHz, C₆D₆, 25 °C) δ = 83.6 (s); **²⁹Si{¹H}-NMR** (59 MHz, C₆D₆, 25 °C) δ = 11.1 (d, *J*_{PSi} = 4.1 Hz).

### Isomère minoritaire LGeCl (36 %) :

**¹H-NMR** (300 MHz, C₆D₆, 25 °C) δ = 0.23 (s, 3H, SiCH₃), 0.27 (s, 3H, SiCH₃), 1.20 (s, 9H, CH_{3*t*Bu}), 1.22 (d, *J*_{HH} = 9.0 Hz, 1H, CH₂), 1.24 (d, *J*_{HH} = 6.6 Hz, 3H, CH_{3*i*Pr}), 1.30 (d, *J*_{HH} = 6.9 Hz, 3H, CH_{3*i*Pr}), 1.34 (d, *J*_{HH} = 6.9 Hz, 1H, CH₂), 1.35 (d, *J*_{HH} = 7.0 Hz, 1H, CH₂), 1.39 (d, *J*_{HH} = 6.9 Hz, 3H, CH_{3*i*Pr}), 1.41 (s, 9H, CH_{3*t*Bu}), 1.61 (d, *J*_{HH} = 6.3 Hz, 3H,CH_{3*i*Pr}), 1.58-1.71 (m, 3H, CH₂), 2.40 (b, 1H, CH_{bridgehead}), 3.05 (b, 1H, CH_{bridgehead}), 3.22 (sept., *J*_{HH} = 6.9 Hz, 1H, CH_{*i*Pr}), 4.00 (sept., *J*_{HH} = 6.9 Hz, 1H, CH_{*i*Pr}), 7.13-7.27 (m, 3H, CH_{Ar}); **¹³C{¹H}-NMR** (75 MHz, C₆D₆, 25 °C) δ = 3.9 (d, *J*_{PC} = 1.3 Hz, SiCH₃), 5.5 (d, *J*_{PC} = 5.0 Hz, SiCH₃), 23.9 (s, CH_{3*i*Pr}), 25.2 (s, CH_{3*i*Pr}), 25.4 (s, CH_{3*i*Pr}), 25.6 (d, *J*_{PC} = 1.3 Hz, CH₂), 26.1 (d, *J*_{PC} = 2.1 Hz, CH_{3*i*Pr}), 27.6 (s, CH_{*i*Pr}), 28.4 (s, CH_{*i*Pr}), 28.6 (d, *J*_{PC} = 1.5 Hz, CH₂), 32.4 (d, *J*_{PC} = 4.0 Hz, CH_{3*t*Bu}), 32.9 (d, *J*_{PC} = 2.9 Hz, CH_{3*t*Bu}), 40.6 (d, *J*_{PC} = 7.0 Hz, CH_{bridgehead}), 43.3 (d, *J*_{PC} = 14 Hz, CH_{bridgehead}), 48.7 (d, *J*_{PC} = 6.0 Hz, CH₂), 51.5 (d, *J*_{PC} = 3.9 Hz, 2C, C_{*t*Bu}), 98.9 (d, *J*_{PC} = 21 Hz, PC), 123.7 (s, CH_{Ar}), 124.4 (s, CH_{Ar}), 126.8 (s, CH_{Ar}), 139.5 (s, C_{Ar}), 145.9 (s, C_{Ar}), 147.8 (s, C_{Ar}), 184.5 (d, *J*_{PC} = 23 Hz, NC); **³¹P{¹H}-NMR** (121 MHz, C₆D₆, 25 °C) δ = 84.4 (s); **²⁹Si{¹H}-NMR** (59 MHz, C₆D₆, 25 °C) δ = 11.0 (d, *J*_{PSi} = 4.3 Hz).

### 4-f) Préparation du composé organique (10)

A une solution de chlorogermylène **11** (3.3 g, 5.4 mmol) dans 20 ml de THF refroidie à -78°C est ajouté une solution de LiBEt3H (1.0 M, 5.4 mL, 5.4 mmol) et le mélange est agité à -78°C pendant 30 min, puis à température ambiante pendant 30 min. Une fois les différents composés volatiles évaporés, le solide est extrait au pentane (30 mL) puis le mélange est concentré (environ 10 mL) et le composé organique (10) est obtenu sous la forme de cristaux blancs (1.5 g, 48%) après cristallisation à -30°C. PF: 150-152 °C (décomposition), IR (Ge-H bond) = 1814 cm⁻¹, UV: pics à 239, 288 et 335 nm.

### Exemple 5 Préparation du composé organique (11) selon l'invention:

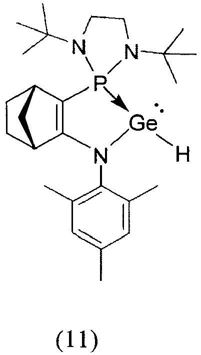

### 5-a) Schéma réactionnel :

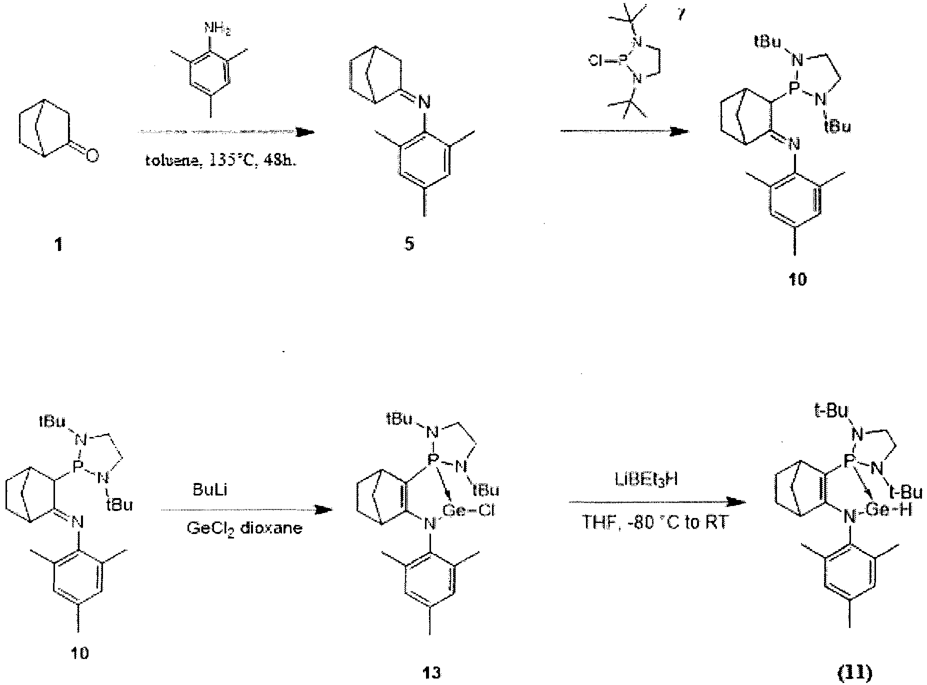

### 5-b) Synthèse du composé intermédiaire 5 :

Dans un ballon bicol de 250 mL équipé d'un DeanStark et d'un réfrigérant sont ajoutés le norcamphore 1 (22.3 g, 0.2 mol), la 2, 4, 6-trimethylaniline (28 mL, 0.2 mol), une quantité catalytique d'acide para-toluene sulfonique (0.38 g), et du toluene (100 mL). Le mélange est chauffé à reflux durant 4 jours à 135°C. Le solvant est évaporé et le résidu huileux est repris dans l'acétone et filtré pour éliminer le peu de solide formé. Le solvant est ensuite évaporé pour donner le produit **5** sous la forme d'une huile jaune (mélange de deux isomères), utilisée par la suite sans autre purification.

### Isomère 1:

**¹H-NMR** (300 MHz, C₆D₆, 25 °C) δ = 1.32-1.39 (m, 1H, CH₂), 1.50-1.56 (m, 2H, CH₂), 1.64-1.68 (m, 1H, CH₂), 1.72-1.80 (m, 3H, CH₂), 1.86-1.92 (m, 1H, CH₂), 2.03 (s, 6H, CH₃), 2.28 (s, 3H, CH₃), 2.51 (m, 1H, CHtdp), 3.05 (m, 1H, CHtdp), 6.85 (br s, 2H, CHAr); **¹³C{¹H}-NMR** (75 MHz, C₆D₆, 25 °C) δ = 17,4 (s, CH₃), 17.5 (s, CH3), 20.6 (s, CH₃), 26.6 (s, CH₂), 27.5 (s, CH₂), 35.6 (s, CHtdp), 38.3 (s, CH₂), 39.1 (s, CH₂), 46.9 (s, CHtdp), 125.4 (s, CAr), 125.8 (s, CAr), 128.4 (s, CHAr), 128.5 (s, CHAr), 131.6 (s, CAr), 146.1 (s, CAr), 182.2 (s, C=N)

### Isomère 2:

**¹H-NMR** (300 MHz, C₆D₆, 25 °C) δ = 1.32-1.39 (m, 1H, CH₂), 1.42-1.46 (m, 2H, CH₂), 1.50-1.56 (m, 1H, CH₂), 1.64-1.68 (m, 1H, CH₂), 1.76-1.78 (m, 1H, CH₂), 2.04 (s, 3H, CH₃), 2.10 (s, 3H, CH₃), 2.19 (m, 1H, CH₂), 2.25 (m, 1H, CH₂), 2.30 (s, 3H, CH₃), 2.51 (m, 1H, CHtdp), 2.61 (m, 1H, CHtdp), 6.86 (br s, 2H, CHAr); **¹³C{¹H}-NMR** (75 MHz, C₆D₆, 25 °C) δ = 17.9 (s, CH₃), 18.1 (s, CH₃), 20.6 (s, CH₃), 24.9 (s, CH₂), 27.6 (s, CH₂), 35.2 (s, CHtdp), 38.2 (s, CH₂), 41.5 (s, CH₂), 42.0 (s, CHtdp), 125.5 (s, CAr), 126.4 (s, CAr), 128.3 (s, CHAr), 128.3 (s, CHAr), 131.6 (s, CAr), 146.8 (s, CAr), 181.5 (s, C=N).

### 5-c) Synthèse du composé intermédiaire 7 :

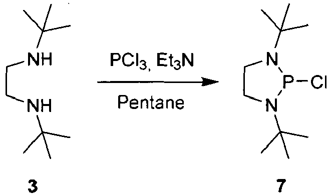

A une solution de PCl₃ (3 mL, 34 mmol) dans le toluene (20 mL) refroidie à 0°C est ajoutée une solution de diamine **3** (5.93 g, 34 mmol) et de triethylamine (9.62 ml, 70 mmol) dans 10 mL de toluène. Le mélange est ensuite agité durant le weekend à température ambiante. Après filtration et extraction au pentane (2x20 mL), les filtrats sont rassemblés et séchés, pour donner le produit 7 sous la forme d'une poudre blanche (6.5 g, 81%).
**¹H-NMR** (300 MHz, C₆D₆, 25 °C) δ = 1.24 (d, *J*_{HH} = 2.11 Hz, 12H, CH₃), 2,84 (d, *J*_{PH} = 6.65 Hz, 2H, CH₂), 3.08 (s, 2H, CH₂); **³¹P{¹H}-NMR** (75 MHz, C₆D₆, 25 °C) δ = 168.22

### 5-d) Synthèse du composé intermédiaire 10 :

A une solution d'imine **5** (5.86 g, 25.8 mmol) dans 35 ml de THF refroidie à -78°C est ajouté le nBuLi (1.6 M, 16.3 mL, 26 mmol) goutte à goutte sous vive agitation. Le mélange lithié est ensuite agité 1h à température ambiante avant d'être de nouveau refroidi à -78°C. La chlorophosphine 7 (6.1 g, 25.8 mmol) est alors ajoutée goutte à goutte, puis le mélange est agité à température ambiante. Une fois le solvant évaporé, le solide est extrait au pentane (50 mL) et à l'éther (50 mL) et séché. Le produit est alors lavé à l'acétonitrile (3X30 mL), et séché de nouveau pour donner le produit **10** sous la forme d'une poudre blanche (9.1 g, 86%).
**¹H-NMR** (300 MHz, C₆D₆, 25 °C) δ = 1.06 (m, *J*_{PH} = 10 Hz, 1H, CH₂), 1.2 (s, 9H, CH_{3tBu}), 1.3 (m, 3H, CH₂), 1.38 (s, 9H, CH_{3tBu}), 1.55 (m, 3H, CH₂), 1.87 (d, *J*_{HH} = 10 Hz, 1H, PCH), 2.2 (s, 3H, CHₘₑₛ), 2.22 (s, 3H, CHₘₑₛ), 2.3 (s, 3H, CHₘₑₛ), 2.4 (d, *J*_{HH} = 3 Hz, 1H, CH_{bridgehead}), 2.55 (m, 1H, CH_{bridgehead}), 2.77 (m, 2H, NCH₂), 2.88 (m, 1H, CH₂), 3.04 (m, 1H, CH₂), 6.84 (s, 1H, CH_{Ar}), 6.87 (s, 1H, CH_{Ar}); **¹³C{¹H}-NMR** (75 MHz, C₆D₆, 25 °C) δ = 18.56 (s, CH₃ₘₑₛ), 18.62 (s, CH₃ₘₑₛ), 20.57 (s, CH₃ₘₑₛ), 26.36 (d, *J*_{PC} = 1.95 Hz, CH₂), 29.27 (d, *J*_{PC} = 1.6 Hz, CH₂), 29.7 (d, *J*_{PC} = 10.6 Hz, CH_{3tBu}), 30.01 (d, *J*_{PC} = 9.5 Hz, CH_{3tBu}), 36.28 (d, *J*_{PC} = 3.8 Hz, CH₂), 40.43 (d, *J*_{PC} = 3.6 Hz CH_{bridgehead}), 42.51 (d, *J*_{PC} = 1 Hz CH_{bridgehead}), 45.3 (d, *J*_{PC} = 9.4 Hz, NCH₂), 47.17 (d, *J*_{PC} = 6.6 Hz, NCH₂), 53.47 (d, *J*_{PC} = 14 Hz, C_{*t*Bu}), 53.86 (d, *J*_{PC} = 19 Hz, C_{*t*Bu}), 55.9 (d, *J*_{PC} = 38 Hz, PCH), 125.08 (s, C_{Ar}), 126.9 (s, C_{Ar}), 128.75 (s, CHₘₑₛ), 128.99 (s, CHₘₑₛ), 125.08 (s, C_{Ar}), 148.52 (s, NC_{Ar}), 181.5 (d, *J*_{PC} = 9.0 Hz, N=C); **³¹P{¹H}-NMR** (121 MHz, C₆D₆, 25 °C) δ = 90.

### 5-e) Synthèse du composé intermédiaire 13 :

A une solution d'iminophosphine **10** (1.6 g, 3.4mmol) dans 10 ml de THF refroidie à -78°C est ajouté le nBuLi (1.6 M, 2.25 mL, 3.6 mmol) goutte à goutte sous vive agitation. Le mélange lithié est ensuite agité 1h à température ambiante avant d'être de nouveau refroidi à -78°C. Une solution de dichlorogermylene dioxane (0.8 g, 3.4 mmol) dans le THF (5 mL) est alors ajoutée goutte à goutte, puis le mélange est agité à température ambiante. Une fois le solvant évaporé, le solide est extrait au pentane (20 mL) et à l'éther (20 mL) puis le mélange est concentré. Le produit **13** est obtenu sous la forme de cristaux jaunes (1.0 g, 52%, mélange de deux isomères) après cristallisation à -30°C.

### Isomère 1 (70%)

**¹H-NMR** (300 MHz, C₆D₆, 25 °C) δ = 1.08 (m, 1H, CH₂), 1.15 (m, 1H, CH_{2bridge}), 1.17 (s 6H, CH_{tBu}), 1.39 (s, 1H, CH₂), 1.47 (s, 9H, CH_{3tBu}), 1.56 (m, 2H, CH₂), 1.69 (m, 1H, CH_{2bridge}), 2.18 (s, 3H, CH₃ₘₑₛ), 2.4 (s, 3H, CH₃ₘₑₛ), 2.46 (m, 1H, CH_{bridgehead}), 2.52 (s, 3H, CH₃ₘₑₛ), 2.6 (m, 2H, CH₂), 2.7 (m, 2H, CH₂), 2.96 (m, 1H, CH_{bridgehead}), 6.82 (m, 1H, CH_{Ar}), 6.87 (m, 1H, CH_{Ar}). **¹³C{¹H}-NMR** (75 MHz, C₆D₆, 25 °C) δ = 20.19 (s, CH₃ₘₑₛ), 20.63 (s, CH₃ₘₑₛ), 21.03 (s, CH₃ₘₑₛ), 25.23 (s, CH₂), 29.38 (s, CH₂), 29.9 (d, *J*_{PC} = 1.6 Hz CH_{3tBu}), 30.16 (d, *J*_{PC} = 3.0 Hz CH_{3tBu}), 41.56 (d, *J*_{PC} = 8.9 Hz CH_{bridgehead}), 43.18 (s, CH₂), 44.18 (d, *J*_{PC} = 13.65 Hz CH_{bridgehead}), 47.11 (d, *J*_{PC} = 4.21 Hz CH_{2bridge}), 53.11 (d, *J*_{PC} = 7.38 Hz C_{*t*Bu}), 54.11 (d, *J*_{PC} = 8.34 Hz C_{*t*Bu}), 94.84 (d, *J*_{PC} = 24.5 Hz, PC), 129.67 (s, CH_{Ar}), 130.07 (s, CH_{Ar}), 134.43 (s, C_{Ar}), 134.69 (s, C_{Ar}), 136.54 (s, C_{Ar}), 140.88 (d, *J*_{PC} = 3.6 Hz NC_{Ar}), 184.57 (d, *J*_{PC} = 43.48 Hz, NC); **³¹P{¹H}-NMR** (121 MHz, C₆D₆, 25 °C) δ = 71.4.

### Isomère 2 (30%)

**¹H-NMR** (300 MHz, C₆D₆, 25 °C) δ = 1.11 (m,1H, CH_{2bridge}), 1.18 (m, 2H, CH₂), 1.24 (s, 9H, CH_{3tBu}), 1.47 (s, 9H, CH_{3tBu}), 1.52 (m, 1H, CH₂), 1.55 (m, 1H, CH₂), 1.68 (m, 1H, CH_{2bridge}), 2.17 (s, 3H, CH₃ₘₑₛ), 2.26 (s, 3H, CH₃ₘₑₛ), 2.3 (m, 1H, CH_{bridgehead}), 2.57 (m, 2H, CH₂), 2.63 (s, 3H, CH₃ₘₑₛ), 2.8 (m, 2H, CH₂), 2.96 (m, 1H, CH_{bridgehead}), 6.79 (m, 1H, CH_{Ar}), ), 6.87 (m, 1H, CH_{Ar}); **¹³C{¹H}-NMR** (75 MHz, C₆D₆, 25 °C) δ = 19.98 (s, CH₃ₘₑₛ), 20.45 (s, CH₃ₘₑₛ), 21.03 (s, CH₃ₘₑₛ), 25.28 (s, CH₂), 28.7 (s, CH₂), 29.64 (d, *J*_{PC} = 4.0 Hz CH_{3tBu}), 30.6 (d, *J*_{PC} = 1.0 Hz CH_{3tBu}), 42.38 (d, *J*_{PC} = 8.3 Hz CH_{bridgehead}), 43.6 (s, CH₂), 43.64 (s, CH₂), 43.82 (s, CH_{bridgehead}), 49.22 (d, *J*_{PC} = 5.8 Hz, CH_{2bridge}), 53.47 (d, *J*_{PC} = 4.76 Hz, C_{*t*Bu}), 53.82 (d, *J*_{PC} = 9.3 Hz, C_{*t*Bu}), 97.92 (d, *J*_{PC} = 22.6 Hz, PC), 129.26 (s, CH_{Ar}), 130.34 (s, CH_{Ar}), 135.08 (s, C_{Ar}), 135.1 (s, C_{Ar}), 137.07 (s, C_{Ar}), 141.06 (d, *J*_{PC} = 5.8 Hz NC_{Ar}), 183.16 (d, *J*_{PC} = 40.0 Hz, NC); **³¹P{¹H}-NMR** (121 MHz, C₆D₆, 25 °C) δ = 74.36.

### 5-f) Synthèse du composé organique (11)

A une solution de chlorogermylène **13** (657 mg, 1.23 mmol) dans 10 ml de THF refroidie à -78°C est ajouté une solution de LiBEt₃H (1.0 M, 1.23 mL, 1.23 mmol) et le mélange est agité à -78°C pendant 30 min, puis à température ambiante pendant 30 min. Une fois les différents composés volatiles évaporés, le solide est extrait au pentane (30 mL) et la solution est concentrée (environ 5 mL). Le composé organique (11) est obtenu sous la forme de cristaux jaunes (200 mg, 32%) après cristallisation à -30°C.

### Exemple 6 : synthèse du composé organique comparatif D_{H} :

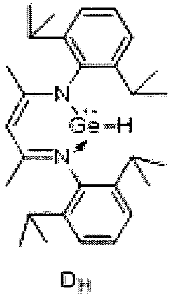

### 6-a) Schéma réactionnel :

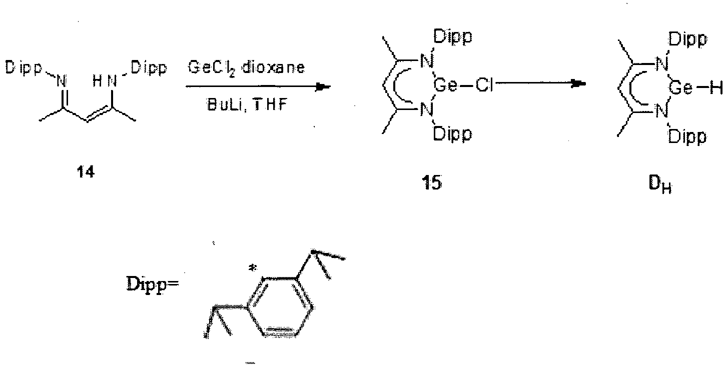

Le symbole « * » dans le schéma réactionnel indique le site de rattachement du groupement dénommé sous le sigle « Dipp »

### 6-b) Synthèse du composé intermédiaire 15:

A une solution de *β*-diketiminate **14** (4.2 g, 10 mmol) dans 20 ml de THF refroidie à -78°C est ajouté le nBuLi (1.6 M, 6.3 mL, 10.5 mmol) goutte à goutte sous vive agitation. Le mélange lithié est ensuite agité 1h à température ambiante avant d'être de nouveau refroidi à -78°C. Une solution de dichlorogermylene dioxane (2.32 g, 10.0 mmol) dans le THF (10 mL) est alors ajoutée goutte à goutte, puis le mélange est remonté à température ambiante sur 1h30, puis agité pendant 1h. Une fois le solvant évaporé, le solide est extrait au toluène (15 mL) et au pentane (15 mL) puis le mélange est séché. Le produit **15** est obtenu sous d'une poudre jaune (5.0 g, 95%) après lavage au pentane (2x20 mL) et séchage.
**¹H-NMR** (300 MHz, C₆D₆, 25 °C) δ = 0.99 (d, *J*_{HH} = 6.6 Hz, 6H, CH(C*H*₃)₂), 1.18 (d, 12H, CH(C*H*₃)₂), 1.43 (d, *J*_{HH} = 6.6 Hz, 6H, CH(C*H*₃)₂), 1.57 (s, 6H, C*H*₃), 3.12 (sept, *J*_{HH} = 6.9 Hz, 2H, CH(C*H*₃)₂), 3.87 (sept, *J*_{HH} = 6.6 Hz, 2H, CH(C*H*₃)₂), 5.12 (s, 1H, CH), 7.01-7.17 (m, 6H, C*H*_{Ar} ); **¹³C{¹H}-NMR** (75 MHz, C₆D₆, 25 °C) δ = 23.28, 24.04, 24.43, 24.64, 27.71, 28.18 , 29.40, 100.63, 123.99 (s, CH_{Ar}), 125.49 (s, CH_{Ar}), 128.03 (s, CH_{Ar}), 139.62 (s, C), 143.49 (s, C_{Ar}), 147.07 (s, C_{Ar}), 164.88 (s, C_{Ar}).

### 6-c) synthèse du composé organique comparatif D_{H}

A une solution de chlorogermylène **15** (1.77 mg, 3.37 mmol) dans 20 ml de THF refroidie à -10°C est ajouté une solution de K[HB(secBu)₃] (1.0 M dans le THF, 4.0 mL) et le mélange est agité à température ambiante pendant 3h (changement de couleur du jaune au rouge). Une fois les différents composés volatiles évaporés, le solide est extrait au pentane (30 mL) et la solution est concentrée (environ 10 mL). Le produit **D_{H}** est obtenu sous la forme de cristaux rouges (79%) après cristallisation à -30°C.
**¹H-NMR** (300 MHz, C₆D₆, 25 °C) δ = 1.17 (d, 12H, CH(C*H*₃)₂), 1.28 (d, *J*_{HH} = 6.6 Hz, 6H, CH(C*H*₃)₂), 1.36 (d, *J*_{HH} = 6.9 Hz, 6H, CH(C*H*₃)₂), 1.55 (s, 6H, CH₃), 3.37 (sept, *J*_{HH} = 6.6 Hz, 2H, CH(C*H*₃)₂), 3.59 (sept, *J*_{HH} = 6.9 Hz, 2H, CH(C*H*₃)₂), 4.92 (s, 1H, *CH*), 7.05-7.15 (m, 6H, C*H*_{Ar}), 8.07 (s, 1H, Ge*H*); **¹³C{¹H}-NMR** (75 MHz, C₆D₆, 25 °C) δ = 22.79, 23.63, 24.33, 24.79, 26.96, 28.12, 28.92 , 97.77, 124.17 (s, CH_{Ar}), 124.55 (s, CH_{Ar}), 127.18 (s, CH_{Ar}), 141.52 (s, C), 143.32 (s, C_{Ar}), 146.38 (s, C_{Ar}), 167.43 (s, C_{Ar}).

### Exemple 7: Etude de l'activité catalytique des composés organiques (7), (10) et (11) selon l'invention versus le composé organique D_{H} (comparatif) sur la réaction d'hydrosilylation du trifluoroacétophènone par le phénvlsilane.

### 7-a) Procédure générale pour les réactions catalytiques

Dans un tube RMN à pression Wilmad sont ajoutés dans l'ordre le catalyseur (Cat., 0.025 mmol), 0.2 mL de C₆D₆ ou de toluene et les substrats phénylsilane (PhSiH₃, 1.0 mmol) et trifluoroacétophénone (1.0 mmol). Le tube est ensuite chauffé à différentes températures et la réaction est contrôlée par RMN. Une fois la réaction terminée, le mélange est hydrolysé dans une solution aqueuse de HCl (2 mL, 1N) et de THF (2 mL) pendant 4h, puis le produit est extrait dans le dichlorométhane (2x10 mL). Les phases organiques sont rassemblées et lavées (brine), puis séchées et le solvant est évaporé. Le produit est ensuite caractérisé par RMN et GC-MS. Les % de conversion des substrats ont été calculés par RMN et GC-MS. Les résultats sont consignés dans le Tableau 1.

### 7-b) Blanc (réaction témoin)

Dans un tube RMN à pression Wilmad sont ajoutés 0.2 mL de toluene et les substrats phenylsilane (1.0 mmol) et trifluoroacétophénone (1.0 mmol) sans catalyseur. Le tube est ensuite chauffé à 120°C pendant 24h et la réaction est contrôlée par RMN. Seulement 4% de conversion est observée.

### 7-c) Résultats

**Tableau 1 : Résultats de l'activité catalytique des composés organiques (7), (10) et (11) selon l'invention versus le composé organique D_{H} (comparatif) sur la réaction d'hydrosilylation du trifluoroacétophènone par le phénylsilane.**

| **Substrat** | **Catalyseur testé** | **Température de réaction (°C)** | **Durée de réaction** | **% de conversion** |
|---|---|---|---|---|
| 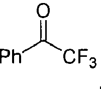 | **(10)** | **15 °C** | **24 h** | **Pas de réaction** |
| | | **80 °C** | **7 jours** | **97%** |
| | | **120 °C** | **3 h** | **100%** |
| | **(7)** | **15 °C** | **90 min** | **100%** |
| | **(11)** | **15 °C** | **20 min** | **100%** |
| | **D_{H}** | **15 °C** | **24 h** | **Pas de réaction** |
| | | **80 °C** | **3 jours** | **43%** |
| | | **120 °C** | **3 jours** | **100%** |

Bien que les structures chimiques des composés organiques (7), (10) et (11) selon l'invention soient proche du composé D_{H} (comparatif) on remarque que :
1) Les composés organiques (7) et (11) présentent à une température réactionnelle égale à 15°C un taux de conversion de 100% après 90 et 20 minutes respectivement alors que pour le composé D_{H} (comparatif) il n'y a pas de réaction même après 24 heures ; et
2) à une température réactionnelle de 120°C, le composé organique (7) présente un taux de conversion de 100% après 3 heures de réaction, alors que pour le composé D_{H} (comparatif) il faut attendre 3 jours de temps de réaction.

## Revendications

1. Procédé d'hydrosilylation d'un composé insaturé (A) comprenant au moins une fonction cétone, une fonction aldéhyde, une fonction alcène et/ou une fonction alcyne, avec un composé (B) comprenant au moins une fonction hydrogénosilyle,
ledit procédé étant **caractérisé en ce qu'**il est catalysé par un composé organique (C) représenté par la formule (1): 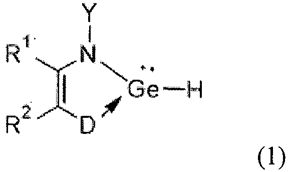 dans laquelle :
• les symboles « Ge », « N » et « H » représentent respectivement un atome de germanium, un atome d'azote et un atome d'hydrogène,
• le symbole Y est un groupe alkyle contenant de 1 à 12 atomes de carbone, ou un groupe aryle contenant de 6 à 30 atomes de carbone, et de préférence **Y** est un groupe aryle contenant de 6 à 30 atomes,
• les groupes R¹ et R², identiques ou différents, représentent un atome d'hydrogène, un groupe alkyle contenant de 1 à 30 atomes de carbone, un groupe alcènyle contenant de 2 à 12 atomes de carbone, un groupe aryle contenant de 6 à 18 atomes de carbone, R¹ et R² pouvant être reliés par une liaison covalente de manière à former un cycle ou un bicycle, éventuellement substitué, ayant de 5 à 8 atomes, et de préférence R¹ et R² sont reliés par une liaison covalente de manière à former un cycle ou un bicycle, éventuellement substitué, ayant de 5 à 8 atomes de carbone,
• le symbole « 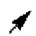 » représente une liaison covalente de coordination due à la présence dans le ligand **D** d'une paire libre d'électrons, et
• **D** est un ligand qui est un groupement phosphine, sulfure ou iminophosphorane comportant une paire libre d'électrons.

2. Procédé selon la revendication 1, dans lequel le ligand **D** est choisi parmi le groupe constitué par :
• un groupement phosphine de formule (2) suivante : 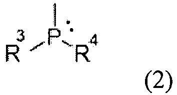 dans laquelle :
- les groupes R³ et R⁴, identiques ou différents, représentent un atome d'hydrogène, un atome d'halogène, un groupe halogénoalkyle contenant de 1 à 20 atomes de carbone, un groupe alkyle contenant de 1 à 20 atomes de carbone et éventuellement un ou plusieurs atomes d'azote ou de silicium, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone, et lorsque R³ et R⁴ sont des groupes alkyles contenant de 1 à 20 atomes de carbone et éventuellement un ou plusieurs atomes d'azote et/ou de silicium, lesdits groupes R³ et R⁴ peuvent être reliés par une liaison covalente de manière à former avec l'atome de phosphore un cycle à 4, 5 ou 6 atomes éventuellement substitué par un ou plusieurs groupe(s) alkyle(s) ayant de 1 à 10 atomes de carbone;
• un groupement sulfure de formule (3) suivante: 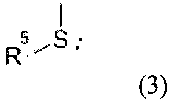 dans laquelle :
- le groupe R⁵, représente un atome d'hydrogène, un atome d'halogène, un groupe alkyle ou halogénoalkyle contenant de 1 a 20 atomes de carbone, un groupe cycloalkyle contenant de 3 a 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; R⁵ pouvant également former, avec les atomes auxquels il est lié, un cycle monocyclique ou polycyclique constitué de 3 à 20 atomes ; et
• un groupement iminophosphorane de formule (4) suivante : 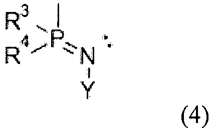 dans laquelle :
- le symbole Y représente un groupe alkyle contenant de 1 à 30 atomes de carbone, ou un groupe aryle contenant de 6 à 18 atomes de carbone,
les groupes R³ et R⁴ identiques ou différents, représentent un atome d'hydrogène, un atome d'halogène, un groupe alkyle ou halogenoalkyle contenant de 1 a 20 atomes de carbone, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; avec R³ et R⁴ pouvant également former soit ensemble ou soit avec les atomes auxquels ils sont liés, un cycle monocyclique ou polycyclique constitué de 3 à 20 atomes et pouvant contenir un ou plusieurs atomes d'azote ou de silicium.

3. Procédé selon l'une quelconque des revendications 1 et 2 dans lequel le ligand **D** est un groupement phosphine de formules (5) ou (6) suivantes: 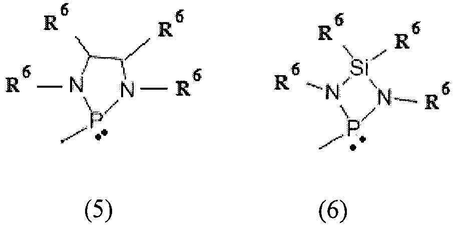 dans lesquelles les groupements R⁶ sont identiques ou différents et représentent un groupe alkyle ayant de 1 à 10 atomes de carbone.

4. Procédé selon la revendication 1 dans lequel le composé organique **C** est choisi parmi le groupe constitué par les molécules de formules (7), (8), (9), (10), (11), (12) et (13):

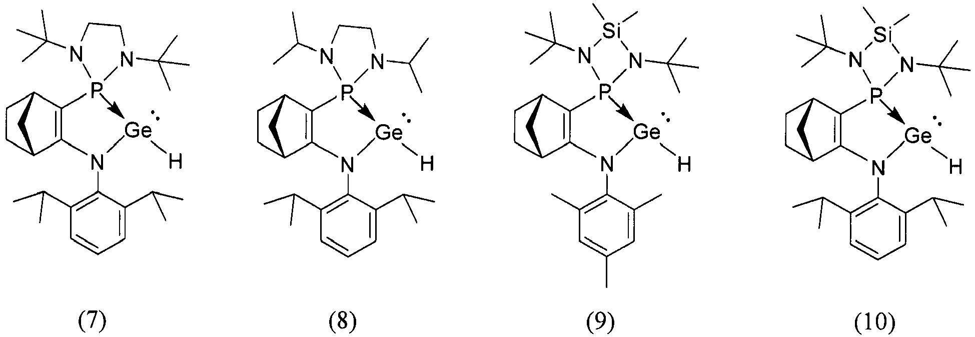

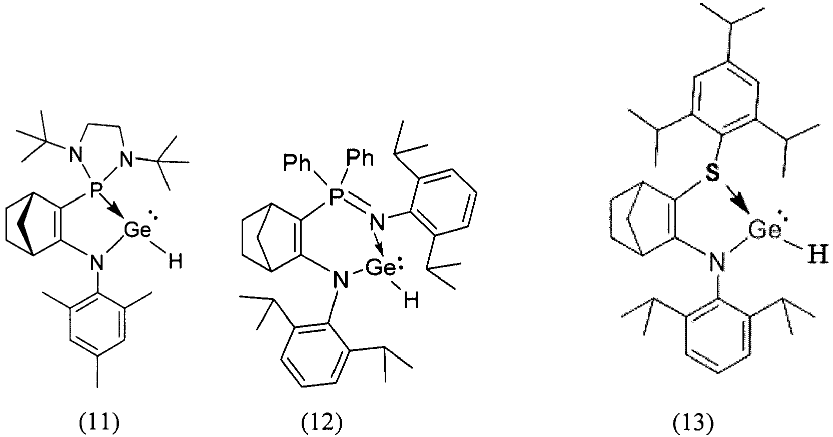

5. Procédé selon la revendication 1 **caractérisé en ce que** le composé insaturé (A) comprend une ou plusieurs fonctions alcène ou alcyne, et, de préférence, de 2 à 40 atomes de carbone.

6. Procédé selon la revendication 1 **caractérisé en ce que** le composé (B) comprenant au moins une fonction hydrogénosilyle est choisi parmi le groupe constitué par:
- un composé silane ou polysilane comprenant au moins un atome d'hydrogène lié à un atome de silicium,
- un composé organopolysiloxane comprenant au moins un atome d'hydrogène lié à un atome de silicium, de préférence un composé organopolysiloxane comprenant par molécule au moins deux fonctions hydrogénosilyle, et
- un polymère organique comprenant des fonctions hydrogénosilyles en positions terminales.

7. Procédé selon la revendication1 **caractérisé en ce que** :
a) le composé insaturé (A) est choisi parmi les composés organopolysiloxanes comportant des motifs de formule (I) :
A_{g}UₕSiO_{(4-(g+h))/2} (I)
dans laquelle :
- les radicaux A, identiques ou différents, représentent un radical alcényle ou alcynyle, linéaire ou ramifié, contenant entre 2 et 6 atomes de carbone ;
- les radicaux U, identiques ou différents, représentent un radical monovalent différent d'un atome d'hydrogène, et de préférence choisi dans le groupe constitué par le méthyle, l'éthyle, le propyle, le 3,3,3-trifluoropropyle, le xylyle, le tolyle et le phényle.
- g et h représentent des nombres entiers, g valant 1 ou 2, h valant 0, 1 ou 2 et (g+h) valant 1, 2 ou 3 ; et
- comportant éventuellement d'autres motifs de formule (II) :
UᵢSᵢO_{(4-i)/2} (II)
- dans laquelle U a la même signification que ci-dessus, et i représente un nombre entier de 0 à 3, et
b) le composé (B) est un organopolysiloxane comprenant au moins un motif de formule (III) :
H_{d}UₑSiO_{(4-(d+e))/2} (III)
dans laquelle :
- les radicaux U, identiques ou différents, représentent un radical monovalent différent d'un atome d'hydrogène, et de préférence choisi dans le groupe constitué par le méthyle, l'éthyle, le propyle, le 3,3,3-trifluoropropyle, le xylyle, le tolyle et le phényle.
- d et e représentent des nombres entiers, d valant 1 ou 2, e valant 0, 1 ou 2 et (d+e) valant 1, 2 ou 3 ;
- et éventuellement d'autres motifs de formule (IV) :
U_{f}SiO_{(4-f)/2} (IV)
dans laquelle U a la même signification que ci-dessus, et f représente un nombre entier compris entre 0 et 3.

8. Composé organique (C) représenté par la formule (1): 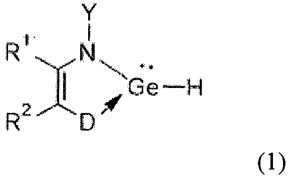 dans laquelle :
• les symboles « Ge », « N » et « H » représentent respectivement un atome de germanium, un atome d'azote et un atome d'hydrogène,
• le symbole **Y** est un groupe alkyle contenant de 1 à 12 atomes de carbone, ou un groupe aryle contenant de 6 à 18 atomes de carbone, et de préférence **Y** est un groupe aryle contenant de 6 à 18 atomes,
• les groupes R¹ et R², identiques ou différents, représentent un atome d'hydrogène, un groupe alkyle contenant de 1 à 20 atomes de carbone, un groupe alcènyle contenant de 2 à 12 atomes de carbone, un groupe aryle contenant de 6 à 18 atomes de carbone, R¹ et R² pouvant être reliés par une liaison covalente de manière à former un cycle ou un bicycle, éventuellement substitué, ayant de 5 à 8 atomes, et de préférence R¹ et R² sont reliés par une liaison covalente de manière à former un cycle ou un bicycle, éventuellement substitué, ayant de 5 à 8 atomes de carbone,
• le symbole « 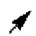 » représente une liaison covalente de coordination due à la présence dans le ligand **D** d'une paire libre d'électrons, et
• **D** est un ligand qui est un groupement phosphine, sulfure ou iminophosphorane comportant une paire libre d'électrons.

9. Composé organique (C) selon la revendication 8 dans lequel le ligand **D** est choisi parmi le groupe constitué par :
• un groupement phosphine de formule (2) suivante : 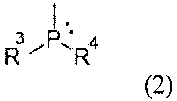 dans laquelle :
- les groupes R³ et R⁴, identiques ou différents, représentent un atome d'hydrogène, un atome d'halogène, un groupe halogénoalkyle contenant de 1 à 20 atomes de carbone, un groupe alkyle contenant de 1 à 20 atomes de carbone et éventuellement un ou plusieurs atomes d'azote ou de silicium, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone, et lorsque R³ et R⁴ sont des groupes alkyles contenant de 1 à 20 atomes de carbone et éventuellement un ou plusieurs atomes d'azote et/ou de silicium, lesdits groupes R³ et R⁴ peuvent être reliés par une liaison covalente de manière à former avec l'atome de phosphore un cycle à 4, 5 ou 6 atomes éventuellement substitué par un ou plusieurs groupe(s) alkyle(s) ayant de 1 à 10 atomes de carbone;
• un groupement sulfure de formule (3) suivante: 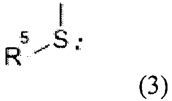 dans laquelle :
- le groupe R⁵, représente un atome d'hydrogène, un atome d'halogène, un groupe alkyle ou halogénoalkyle contenant de 1 a 20 atomes de carbone, un groupe cycloalkyle contenant de 3 a 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; R⁵ pouvant également former, avec les atomes auxquels il est lié, un cycle monocyclique ou polycyclique constitué de 3 à 20 atomes ; et
• un groupement iminophosphorane de formule (4) suivante : 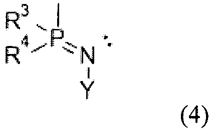 dans laquelle :
- le symbole Y représente un groupe alkyle contenant de 1 à 30 atomes de carbone, ou un groupe aryle contenant de 6 à 18 atomes de carbone,
les groupes R³ et R⁴ identiques ou différents, représentent un atome d'hydrogène, un atome d'halogène, un groupe alkyle ou halogenoalkyle contenant de 1 a 20 atomes de carbone, un groupe cycloalkyle contenant de 3 à 20 atomes de carbone, un groupe cycloalkyle-alkyle contenant de 4 à 40 atomes de carbone, un groupe aryle contenant de 6 à 18 atomes de carbone, un groupe aryle-alkyle contenant de 6 à 38 atomes de carbone; avec R³ et R⁴ pouvant également former soit ensemble ou soit avec les atomes auxquels ils sont liés, un cycle monocyclique ou polycyclique constitué de 3 à 20 atomes et pouvant contenir un ou plusieurs atomes d'azote ou de silicium.

10. Composé organique (C) selon l'une quelconque des revendications 8 et 9 dans lequel le ligand **D** est un groupement phosphine de formules (5) ou (6) suivantes: 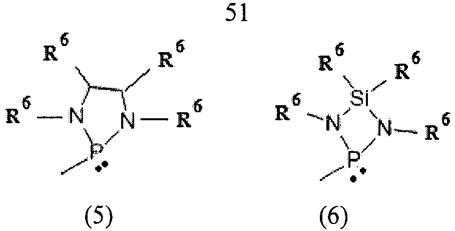 dans lesquelles les groupements R⁶ sont identiques ou différents et représentent un groupe alkyle ayant de 1 à 10 atomes de carbone.

11. Composé organique (C) selon l'une quelconque des revendications 8-10 représenté par une des formules (7), (8), (9), (10), (11), (12) et (13):

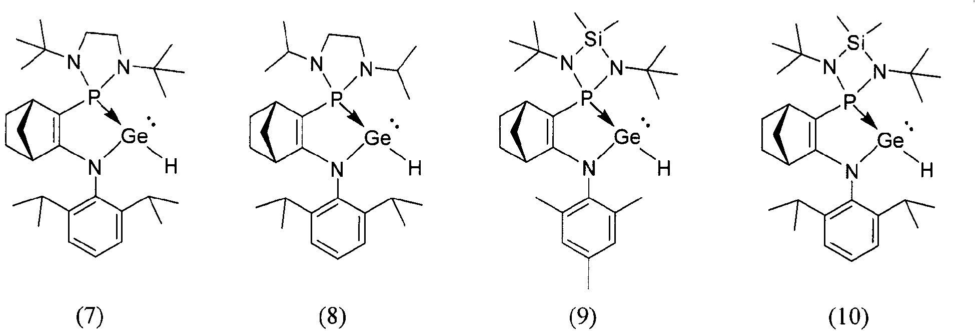

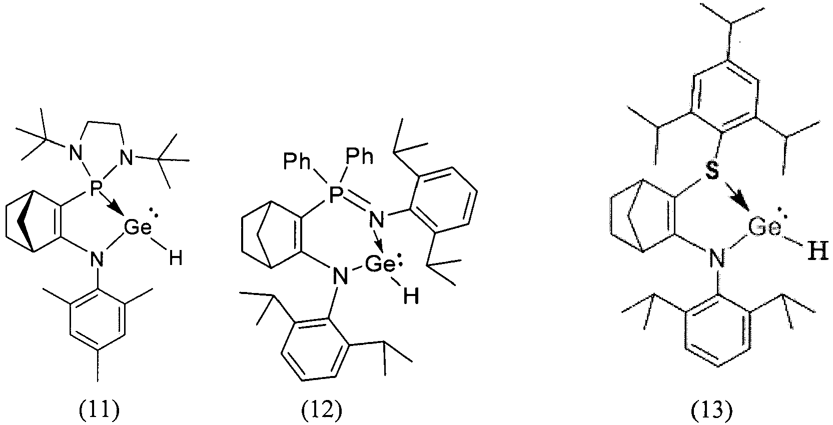

12. Utilisation d'un composé organique (C) selon l'une quelconque des revendications 8 à 11 comme catalyseur d'hydrosilylation.

13. Composition comprenant
- au moins un composé insaturé (A) comprenant au moins une fonction cétone, une fonction aldéhyde, une fonction alcène et/ou une fonction alcyne,
- au moins un composé (B) comprenant au moins une fonction hydrogénosilyle, et
- un catalyseur choisi parmi les composés organiques (C) selon l'une quelconques des revendications 8 à 11.

14. Composition selon la revendication 13, **caractérisée en ce que** la concentration molaire en catalyseur dans la composition est de 0,01% à 10%, de préférence de 0,1% à 7,5%, et de façon plus préférée de 0,5% à 5,5% par rapport au nombre de mole de composé insaturé (A).

## Patentansprüche

1. Verfahren zur Hydrosilylierung einer ungesättigten Verbindung (A) mit mindestens einer Ketonfunktion, einer Aldehydfunktion, einer Alkenfunktion und/oder einer Alkinfunktion mit einer Verbindung (B) mit mindestens einer Hydrogensilylfunktion, wobei das Verfahren **dadurch gekennzeichnet ist, dass** es durch eine organische Verbindung (C) der Formel (1): 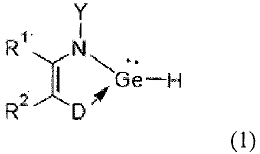 in der:
• die Symbole "Ge", "N" und "H" für ein Germaniumatom, ein Stickstoffatom bzw. ein Wasserstoffatom stehen,
• das Symbol Y für eine Alkylgruppe mit 1 bis 12 Kohlenstoffatomen oder eine Arylgruppe mit 6 bis 30 Kohlenstoffatomen steht und Y vorzugsweise für eine Arylgruppe mit 6 bis 30 Atomen steht,
• die Gruppen R¹ und R² gleich oder verschieden sind und für ein Wasserstoffatom, eine Alkylgruppe mit 1 bis 30 Kohlenstoffatomen, eine Alkenylgruppe 2 bis 12 Kohlenstoffatomen oder eine Arylgruppe mit 6 bis 18 Kohlenstoffatomen stehen, wobei R¹ und R² so über eine kovalente Bindung verknüpft sein können, dass sie einen gegebenenfalls substituierten Cyclus oder Bicyclus mit 5 bis 8 Atomen bilden, und vorzugsweise R¹ und R² so über eine kovalente Bindung verknüpft sind, dass sie einen gegebenenfalls substituierten Cyclus oder Bicyclus mit 5 bis 8 Atomen bilden,
• das Symbol " 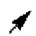 " für eine koordinative kovalente Bindung aufgrund des Vorliegens eines freien Elektronenpaars in dem Liganden D steht und
• D für einen Liganden steht, bei dem es sich um eine Phosphin-, Sulfid- oder Iminophosphorangruppe mit einem freien Elektronenpaar handelt, katalysiert wird.

2. Verfahren nach Anspruch 1, wobei der Ligand D aus der Gruppe bestehend aus
• einer Phosphingruppe der folgenden Formel (2): 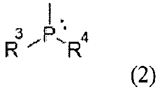 in der
- die Gruppen R³ und R⁴ gleich oder verschieden sind und für ein Wasserstoffatom, ein Halogenatom, eine Halogenalkylgruppe mit 1 bis 20 Kohlenstoffatomen, eine Alkylgruppe mit 1 bis 20 Kohlenstoffatomen und gegebenenfalls einem oder mehreren Stickstoff- oder Siliciumatomen, eine Cycloalkylgruppe mit 3 bis 20 Kohlenstoffatomen, eine Cycloalkylalkylgruppe mit 4 bis 40 Kohlenstoffatomen, eine Arylgruppe mit 6 bis 18 Kohlenstoffatomen oder eine Arylalkylgruppe mit 6 bis 38 Kohlenstoffatomen stehen und dann, wenn R³ und R⁴ Alkylgruppen mit 1 bis 20 Kohlenstoffatomen und gegebenenfalls einem oder mehreren Stickstoff- und/oder Siliciumatomen sind, die Gruppen R³ und R⁴ so über eine kovalente Bindung verknüpft sein können, dass sie mit dem Phosphoratom einen Cyclus mit 4, 5 oder 6 Atomen, der gegebenenfalls durch eine oder mehrere Alkylgruppen mit 1 bis 10 Kohlenstoffatomen substituiert ist, bilden;
• einer Sulfidgruppe der folgenden Formel (3): 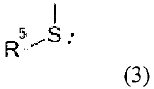 in der
- die Gruppe R⁵ für ein Wasserstoffatom, ein Halogenatom, eine Alkyl- oder Halogenalkylgruppe mit 1 bis 20 Kohlenstoffatomen, eine Cycloalkylgruppe mit 3 bis 20 Kohlenstoffatomen, eine Cycloalkylalkylgruppe mit 4 bis 40 Kohlenstoffatomen, eine Arylgruppe mit 6 bis 18 Kohlenstoffatomen oder eine Arylalkylgruppe mit 6 bis 38 Kohlenstoffatomen stehen, wobei R⁵ auch mit den Atomen, an die es gebunden ist, einen monocyclischen oder polycyclischen Ring aus 3 bis 20 Atomen bilden kann; und
• einer Iminophosphorangruppe der folgenden Formel (4): 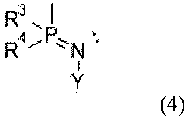 in der
- das Symbol Y für eine Alkylgruppe mit 1 bis 30 Kohlenstoffatomen oder eine Arylgruppe mit 6 bis 18 Kohlenstoffatomen steht,
die Gruppen R³ und R⁴ gleich oder verschieden sind und für ein Wasserstoffatom, ein Halogenatom, eine Alkyl- oder Halogenalkylgruppe mit 1 bis 20 Kohlenstoffatomen, eine Cycloalkylgruppe mit 3 bis 20 Kohlenstoffatomen, eine Cycloalkylalkylgruppe mit 4 bis 40 Kohlenstoffatomen, eine Arylgruppe mit 6 bis 18 Kohlenstoffatomen oder eine Arylalkylgruppe mit 6 bis 38 Kohlenstoffatomen stehen, wobei R³ und R⁴ auch zusammen oder mit den Atomen, an die sie gebunden sind, einen monocyclischen oder polycyclischen Ring aus 3 bis 20 Atomen, der gegebenenfalls ein oder mehrere Stickstoff- oder Siliciumatome enthält, bilden können;
ausgewählt ist.

3. Verfahren nach einem der Ansprüche 1 und 2, wobei es sich bei dem Liganden D um eine Phosphingruppe der folgenden Formeln (5) oder (6) handelt: 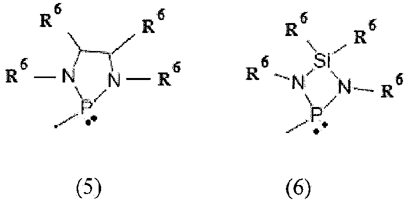 wobei die Gruppen R⁶ gleich oder verschieden sind und für eine Alkylgruppe mit 1 bis 10 Kohlenstoffatomen stehen.

4. Verfahren nach Anspruch 1, wobei die organische Verbindung C aus der Gruppe bestehend aus den Molekülen der Formeln (7), (8), (9), (10), (11), (12) und (13) ausgewählt ist:

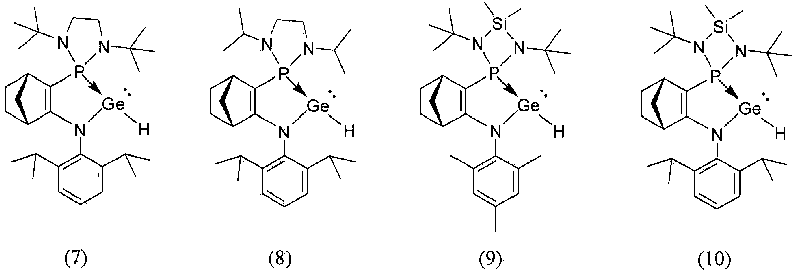

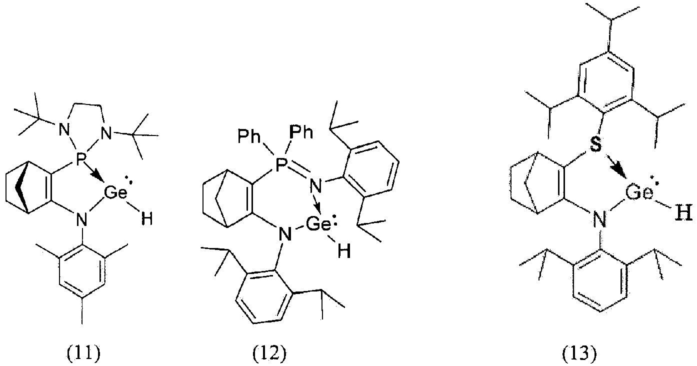

5. Verfahren nach Anspruch 1, **dadurch gekennzeichnet, dass** die ungesättigte Verbindung (A) eine oder mehrere Alken- oder Alkinfunktionen und vorzugsweise 2 bis 40 Kohlenstoffatome umfasst.

6. Verfahren nach Anspruch 1, **dadurch gekennzeichnet, dass** die Verbindung (B) mit mindestens einer Hydrogensilylfunktion aus der Gruppe bestehend aus
- einer Silan- oder Polysilanverbindung mit mindestens einem an ein Siliciumatom gebundenen Wasserstoffatom,
- einer Organopolysiloxanverbindung mit mindestens einem an ein Siliciumatom gebundenen Wasserstoffatom, vorzugsweise einer Organopolysiloxanverbindung mit mindestens zwei Hydrogensilylfunktionen pro Molekül, und
- einem organischen Polymer mit Hydrogensilylfunktionen in Endpositionen
ausgewählt ist.

7. Verfahren nach Anspruch 1, **dadurch gekennzeichnet, dass**
a) die ungesättigte Verbindung (A) aus Organopolysiloxanverbindungen mit Einheiten der Formel (I):
A_{g}UₕSiO_{(4-(g+h))/2} (I)
in der
- die Reste A gleich oder verschieden sind und für einen linearen oder verzweigten Alkenyl- oder Alkinylrest, der zwischen 2 und 6 Kohlenstoffatome enthält, stehen;
- die Reste U gleich oder verschieden sind und für einen von einem Wasserstoffatom verschiedenen einwertigen Rest stehen und vorzugsweise aus der Gruppe bestehend aus Methyl, Ethyl, Propyl, 3,3,3-Trifluorpropyl, Xylyl, Tolyl und Phenyl ausgewählt sind,
- g und h für ganze Zahlen stehen, wobei g einen Wert von 1 oder 2 hat, h einen Wert von 0, 1 oder 2 hat und (g + h) einen Wert von 1, 2 oder 3 hat; und
- gegebenenfalls mit anderen Einheiten der Formel (II) :
UᵢSiO_{(4-i)/2} (II)
in der U die gleiche Bedeutung wie oben hat und i für eine ganze Zahl von 0 bis 3 steht, ausgewählt ist und
b) es sich bei der Verbindung (B) um ein Organopolysiloxan mit mindestens einer Einheit der Formel (III):
H_{d}UₑSiO_{(4-(d+e))/2} (III)
in der
- die Reste U gleich oder verschieden sind und für einen von einem Wasserstoffatom verschiedenen einwertigen Rest stehen und vorzugsweise aus der Gruppe bestehend aus Methyl, Ethyl, Propyl, 3,3,3-Trifluorpropyl, Xylyl, Tolyl und Phenyl ausgewählt sind,
- d und e für ganze Zahlen stehen, wobei d einen Wert von 1 oder 2 hat, e einen Wert von 0, 1 oder 2 hat und (d + e) einen Wert von 1, 2 oder 3 hat; und
- gegebenenfalls mit anderen Einheiten der Formel (IV) :
U_{f}SiO_{(4-f)/2} (IV)
in der U die gleiche Bedeutung wie oben hat und f für eine ganze Zahl von 0 bis 3 steht,
handelt.

8. Organische Verbindung (C), die durch die Formel (1) wiedergegeben wird: 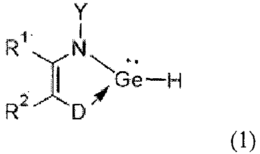 in der:
• die Symbole "Ge", "N" und "H" für ein Germaniumatom, ein Stickstoffatom bzw. ein Wasserstoffatom stehen,
• das Symbol Y für eine Alkylgruppe mit 1 bis 12 Kohlenstoffatomen oder eine Arylgruppe mit 6 bis 18 Kohlenstoffatomen steht und Y vorzugsweise für eine Arylgruppe mit 6 bis 18 Atomen steht,
• die Gruppen R¹ und R² gleich oder verschieden sind und für ein Wasserstoffatom, eine Alkylgruppe mit 1 bis 20 Kohlenstoffatomen, eine Alkenylgruppe 2 bis 12 Kohlenstoffatomen oder eine Arylgruppe mit 6 bis 18 Kohlenstoffatomen stehen, wobei R¹ und R² so über eine kovalente Bindung verknüpft sein können, dass sie einen gegebenenfalls substituierten Cyclus oder Bicyclus mit 5 bis 8 Atomen bilden, und vorzugsweise R¹ und R² so über eine kovalente Bindung verknüpft sind, dass sie einen gegebenenfalls substituierten Cyclus oder Bicyclus mit 5 bis 8 Atomen bilden,
• das Symbol " 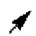 " für eine koordinative kovalente Bindung aufgrund des Vorliegens eines freien Elektronenpaars in dem Liganden D steht und
• D für einen Liganden steht, bei dem es sich um eine Phosphin-, Sulfid- oder Iminophosphorangruppe mit einem freien Elektronenpaar handelt.

9. Organische Verbindung (C) nach Anspruch 8, wobei der Ligand D aus der Gruppe bestehend aus
• einer Phosphingruppe der folgenden Formel (2): 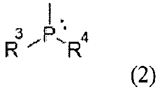 in der
- die Gruppen R³ und R⁴ gleich oder verschieden sind und für ein Wasserstoffatom, ein Halogenatom, eine Halogenalkylgruppe mit 1 bis 20 Kohlenstoffatomen, eine Alkylgruppe mit 1 bis 20 Kohlenstoffatomen und gegebenenfalls einem oder mehreren Stickstoff- oder Siliciumatomen, eine Cycloalkylgruppe mit 3 bis 20 Kohlenstoffatomen, eine Cycloalkylalkylgruppe mit 4 bis 40 Kohlenstoffatomen, eine Arylgruppe mit 6 bis 18 Kohlenstoffatomen oder eine Arylalkylgruppe mit 6 bis 38 Kohlenstoffatomen stehen und dann, wenn R³ und R⁴ Alkylgruppen mit 1 bis 20 Kohlenstoffatomen und gegebenenfalls einem oder mehreren Stickstoff- und/oder Siliciumatomen sind, die Gruppen R³ und R⁴ so über eine kovalente Bindung verknüpft sein können, dass sie mit dem Phosphoratom einen Cyclus mit 4, 5 oder 6 Atomen, der gegebenenfalls durch eine oder mehrere Alkylgruppen mit 1 bis 10 Kohlenstoffatomen substituiert ist, bilden;
• einer Sulfidgruppe der folgenden Formel (3): 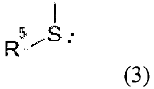 in der
- die Gruppe R⁵ für ein Wasserstoffatom, ein Halogenatom, eine Alkyl- oder Halogenalkylgruppe mit 1 bis 20 Kohlenstoffatomen, eine Cycloalkylgruppe mit 3 bis 20 Kohlenstoffatomen, eine Cycloalkylalkylgruppe mit 4 bis 40 Kohlenstoffatomen, eine Arylgruppe mit 6 bis 18 Kohlenstoffatomen oder eine Arylalkylgruppe mit 6 bis 38 Kohlenstoffatomen stehen, wobei R⁵ auch mit den Atomen, an die es gebunden ist, einen monocyclischen oder polycyclischen Ring aus 3 bis 20 Atomen bilden kann; und
• einer Iminophosphorangruppe der folgenden Formel (4): 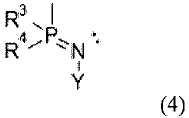 in der
- das Symbol Y für eine Alkylgruppe mit 1 bis 30 Kohlenstoffatomen oder eine Arylgruppe mit 6 bis 18 Kohlenstoffatomen steht,
die Gruppen R³ und R⁴ gleich oder verschieden sind und für ein Wasserstoffatom, ein Halogenatom, eine Alkyl- oder Halogenalkylgruppe mit 1 bis 20 Kohlenstoffatomen, eine Cycloalkylgruppe mit 3 bis 20 Kohlenstoffatomen, eine Cycloalkylalkylgruppe mit 4 bis 40 Kohlenstoffatomen, eine Arylgruppe mit 6 bis 18 Kohlenstoffatomen oder eine Arylalkylgruppe mit 6 bis 38 Kohlenstoffatomen stehen, wobei R³ und R⁴ auch zusammen oder mit den Atomen, an die sie gebunden sind, einen monocyclischen oder polycyclischen Ring aus 3 bis 20 Atomen, der gegebenenfalls ein oder mehrere Stickstoff- oder Siliciumatome enthält, bilden können;
ausgewählt ist.

10. Organische Verbindung (C) nach einem der Ansprüche 8 und 9 wobei es sich bei dem Liganden D um eine Phosphingruppe der folgenden Formeln (5) oder (6) handelt: 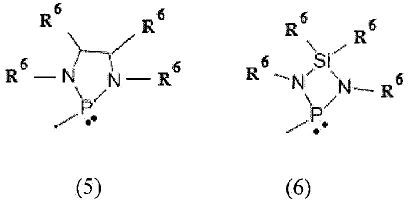 wobei die Gruppen R⁶ gleich oder verschieden sind und für eine Alkylgruppe mit 1 bis 10 Kohlenstoffatomen stehen.

11. Organische Verbindung (C) nach einem der Ansprüche 8-10, die durch eine der Formeln (7), (8), (9), (10), (11), (12) und (13) wiedergegeben wird:

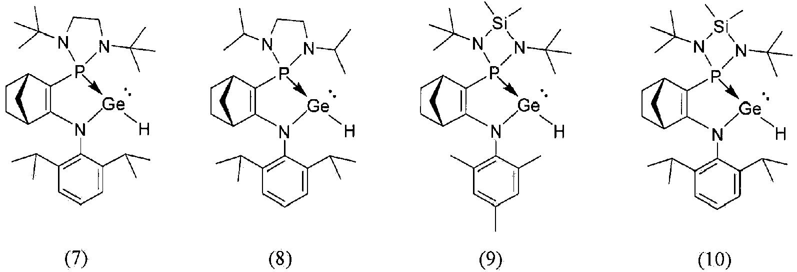

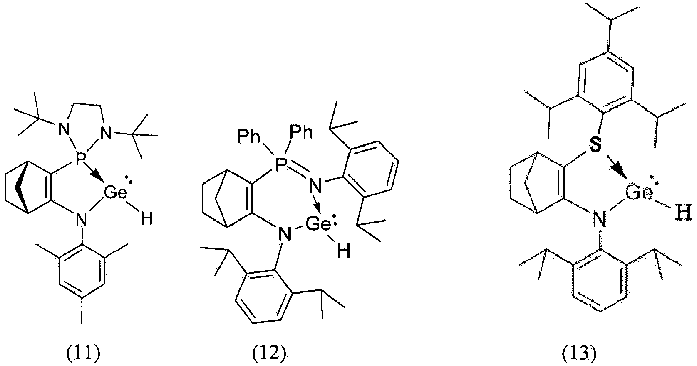

12. Verwendung einer organischen Verbindung (C) nach einem der Ansprüche 8 bis 11 als Hydrosilylierungskatalysator.

13. Zusammensetzung, umfassend
- mindestens eine ungesättigte Verbindung (A) mit mindestens einer Ketonfunktion, einer Aldehydfunktion, einer Alkenfunktion und/oder einer Alkinfunktion,
- mindestens eine Verbindung (B) mit mindestens einer Hydrogensilylfunktion und
- einen Katalysator, der aus den organischen Verbindungen (C) nach einem der Ansprüche 8 bis 11 ausgewählt ist.

14. Zusammensetzung nach Anspruch 13, **dadurch gekennzeichnet, dass** die molare Konzentration an Katalysator in der Zusammensetzung 0,01 bis 10 %, vorzugsweise 0,1 bis 7,5 % und weiter bevorzugt 0,5 bis 5,5 %, bezogen auf die Molzahl der ungesättigten Verbindung (A), beträgt.

## Claims

1. Process for the hydrosilylation of an unsaturated compound (A) comprising at least one ketone function, aldehyde function, alkene function and/or alkyne function, with a compound (B) comprising at least one hydrosilyl function,
said process being **characterized in that** it is catalysed with an organic compound (C) represented by formula (1): 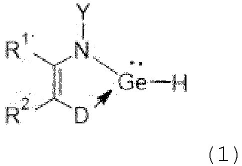 in which:
• the symbols "Ge", "N" and "H" represent, respectively, a germanium atom, a nitrogen atom and a hydrogen atom,
• the symbol Y is an alkyl group containing from 1 to 12 carbon atoms or an aryl group containing from 6 to 30 carbon atoms, and, preferably, Y is an aryl group containing from 6 to 30 atoms,
• the groups R¹ and R², which may be identical or different, represent a hydrogen atom, an alkyl group containing from 1 to 30 carbon atoms, an alkenyl group containing from 2 to 12 carbon atoms, an aryl group containing from 6 to 18 carbon atoms, R¹ and R² possibly being connected via a covalent bond so as to form a ring or a bicycle, which is optionally substituted, containing from 5 to 8 atoms, and preferably R¹ and R² are connected via a covalent bond so as to form a ring or a bicycle, which is optionally substituted, containing from 5 to 8 carbon atoms,
• the symbol " 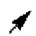 " represents a covalent coordination bond due to the presence in the ligand D of a free pair of electrons, and
• D is a ligand which is a phosphine, sulfide or iminophosphorane group comprising a free pair of electrons.

2. Process according to Claim 1, in which the ligand D is chosen from the group formed by:
• a phosphine group of formula (2) below: 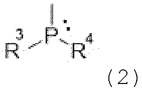 in which:
- the groups R³ and R⁴, which may be identical or different, represent a hydrogen atom, a halogen atom, a haloalkyl group containing from 1 to 20 carbon atoms, an alkyl group containing from 1 to 20 carbon atoms and optionally one or more nitrogen or silicon atoms, a cycloalkyl group containing from 3 to 20 carbon atoms, a cycloalkyl-alkyl group containing from 4 to 40 carbon atoms, an aryl group containing from 6 to 18 carbon atoms, an aryl-alkyl group containing from 6 to 38 carbon atoms, and when R³ and R⁴ are alkyl groups containing from 1 to 20 carbon atoms and optionally one or more nitrogen and/or silicon atoms, said groups R³ and R⁴ may be linked via a covalent bond so as to form, with the phosphorus atom, a ring of 4, 5 or 6 atoms optionally substituted with one or more alkyl groups containing from 1 to 10 carbon atoms;
• a sulfide group of formula (3) below: 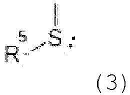 in which:
- the group R⁵ represents a hydrogen atom, a halogen atom, an alkyl or haloalkyl group containing from 1 to 20 carbon atoms, a cycloalkyl group containing from 3 to 20 carbon atoms, a cycloalkyl-alkyl group containing from 4 to 40 carbon atoms, an aryl group containing from 6 to 18 carbon atoms, an aryl-alkyl group containing from 6 to 38 carbon atoms; R⁵ also possibly forming, with the atoms to which it is attached, a monocyclic or polycyclic ring consisting of 3 to 20 atoms; and
• an iminophosphorane group of formula (4) below: 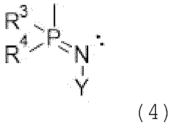 in which:
- the symbol Y represents an alkyl group containing from 1 to 30 carbon atoms or an aryl group containing from 6 to 18 carbon atoms,
the groups R³ and R⁴, which may be identical or different, represent a hydrogen atom, a halogen atom, an alkyl or haloalkyl group containing from 1 to 20 carbon atoms, a cycloalkyl group containing from 3 to 20 carbon atoms, a cycloalkyl-alkyl group containing from 4 to 40 carbon atoms, an aryl group containing from 6 to 18 carbon atoms, an aryl-alkyl group containing from 6 to 38 carbon atoms; with R³ and R⁴ also possibly forming, either together or with the atoms to which they are attached, a monocyclic or polycyclic ring consisting of 3 to 20 atoms and possibly containing one or more nitrogen or silicon atoms.

3. Process according to either one of Claims 1 and 2, in which the ligand D is a phosphine group of formula (5) or (6) below: 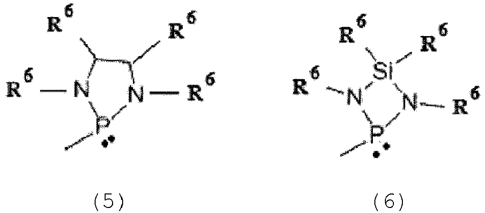 in which the groups R⁶ are identical or different and represent an alkyl group containing from 1 to 10 carbon atoms.

4. Process according to Claim 1, in which the organic compound C is chosen from the group formed by the molecules of formulae (7), (8), (9), (10), (11), (12) and (13) :

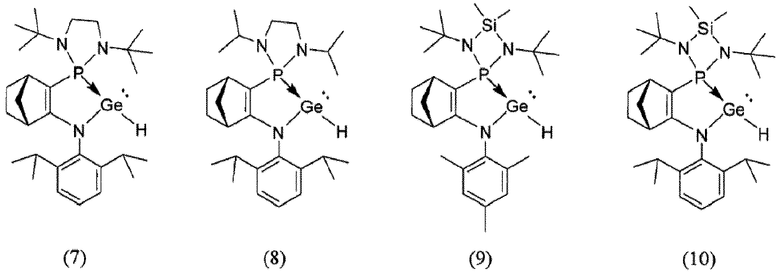

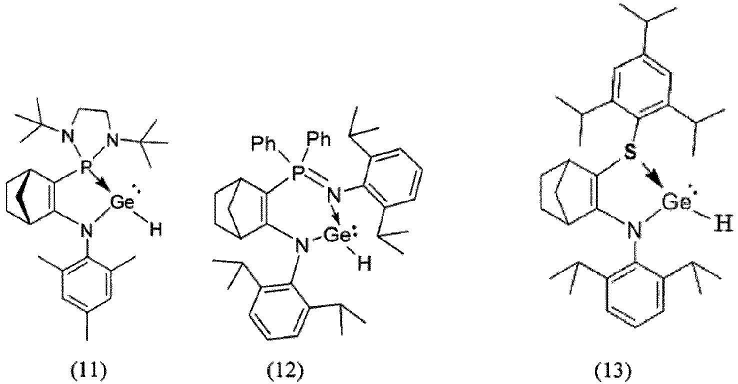

5. Process according to Claim 1, **characterized in that** the unsaturated compound (A) comprises one or more alkene or alkyne functions, and preferably from 2 to 40 carbon atoms.

6. Process according to Claim 1, **characterized in that** the compound (B) comprising at least one hydrosilyl function is chosen from the group formed by:
- a silane or polysilane compound comprising at least one hydrogen atom bonded to a silicon atom,
- an organopolysiloxane compound comprising at least one hydrogen atom bonded to a silicon atom, preferably an organopolysiloxane compound comprising, per molecule, at least two hydrosilyl functions, and
- an organic polymer comprising hydrosilyl functions in end positions.

7. Process according to Claim 1, **characterized in that**:
a) the unsaturated compound (A) is chosen from organopolysiloxane compounds including units of formula (I) :
A_{g}UₕSiO_{(4-(g+h))/2} (I)
in which:
- the radicals A, which may be identical or different, represent a linear or branched alkenyl or alkynyl radical containing between 2 and 6 carbon atoms;
- the radicals U, which may be identical or different, represent a monovalent radical other than a hydrogen atom, and preferably chosen from the group formed by methyl, ethyl, propyl, 3,3,3-trifluoropropyl, xylyl, tolyl and phenyl;
- g and h represent integers, g being 1 or 2, h being 0, 1 or 2 and (g+h) being 1, 2 or 3; and
- optionally including other units of formula (II) :
UᵢSiO_{(4-i)/2} (II)
- in which U has the same meaning as above, and i represents an integer from 0 to 3, and
b) compound (B) is an organopolysiloxane comprising at least one unit of formula (III):
H_{d}UₑSiO_{(4-(d+e))/2} (III)
in which:
- the radicals U, which may be identical or different, represent a monovalent radical other than a hydrogen atom, and preferably chosen from the group formed by methyl, ethyl, propyl, 3,3,3-trifluoropropyl, xylyl, tolyl and phenyl;
- d and e represent integers, d being 1 or 2, e being 0, 1 or 2 and (d+e) being 1, 2 or 3;
- and optionally other units of formula (IV):
U_{f}SiO_{(4-f)/2} (IV)
in which U has the same meaning as above, and f represents an integer between 0 and 3.

8. Organic compound (C) represented by formula (1): 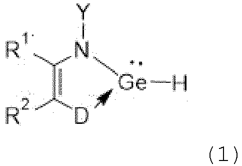 in which:
• the symbols "Ge", "N" and "H" represent, respectively, a germanium atom, a nitrogen atom and a hydrogen atom,
• the symbol Y is an alkyl group containing from 1 to 12 carbon atoms or an aryl group containing from 6 to 18 carbon atoms, and, preferably, Y is an aryl group containing from 6 to 18 atoms,
• the groups R¹ and R², which may be identical or different, represent a hydrogen atom, an alkyl group containing from 1 to 20 carbon atoms, an alkenyl group containing from 2 to 12 carbon atoms, an aryl group containing from 6 to 18 carbon atoms, R¹ and R² possibly being connected via a covalent bond so as to form a ring or a bicycle, which is optionally substituted, containing from 5 to 8 atoms, and preferably R¹ and R² are connected via a covalent bond so as to form a ring or a bicycle, which is optionally substituted, containing from 5 to 8 carbon atoms,
• the symbol " 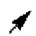 " represents a covalent coordination bond due to the presence in the ligand D of a free pair of electrons, and
• D is a ligand which is a phosphine, sulfide or iminophosphorane group comprising a free pair of electrons.

9. Organic compound (C) according to Claim 8, in which the ligand D is chosen from the group formed by:
• a phosphine group of formula (2) below: 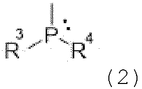 in which:
- the groups R³ and R⁴, which may be identical or different, represent a hydrogen atom, a halogen atom, a haloalkyl group containing from 1 to 20 carbon atoms, an alkyl group containing from 1 to 20 carbon atoms and optionally one or more nitrogen or silicon atoms, a cycloalkyl group containing from 3 to 20 carbon atoms, a cycloalkyl-alkyl group containing from 4 to 40 carbon atoms, an aryl group containing from 6 to 18 carbon atoms, an aryl-alkyl group containing from 6 to 38 carbon atoms, and when R³ and R⁴ are alkyl groups containing from 1 to 20 carbon atoms and optionally one or more nitrogen and/or silicon atoms, said groups R³ and R⁴ may be linked via a covalent bond so as to form, with the phosphorus atom, a ring of 4, 5 or 6 atoms optionally substituted with one or more alkyl groups containing from 1 to 10 carbon atoms;
• a sulfide group of formula (3) below: 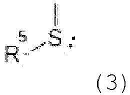 in which:
- the group R⁵ represents a hydrogen atom, a halogen atom, an alkyl or haloalkyl group containing from 1 to 20 carbon atoms, a cycloalkyl group containing from 3 to 20 carbon atoms, a cycloalkyl-alkyl group containing from 4 to 40 carbon atoms, an aryl group containing from 6 to 18 carbon atoms, an aryl-alkyl group containing from 6 to 38 carbon atoms; R⁵ also possibly forming, with the atoms to which it is attached, a monocyclic or polycyclic ring consisting of 3 to 20 atoms; and
• an iminophosphorane group of formula (4) below: 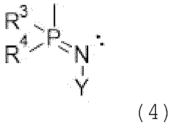 in which:
- the symbol Y represents an alkyl group containing from 1 to 30 carbon atoms or an aryl group containing from 6 to 18 carbon atoms,
the groups R³ and R⁴, which may be identical or different, represent a hydrogen atom, a halogen atom, an alkyl or haloalkyl group containing from 1 to 20 carbon atoms, a cycloalkyl group containing from 3 to 20 carbon atoms, a cycloalkyl-alkyl group containing from 4 to 40 carbon atoms, an aryl group containing from 6 to 18 carbon atoms, an aryl-alkyl group containing from 6 to 38 carbon atoms; with R³ and R⁴ also possibly forming, either together or with the atoms to which they are attached, a monocyclic or polycyclic ring consisting of 3 to 20 atoms and possibly containing one or more nitrogen or silicon atoms.

10. Organic compound (C) according to either one of Claims 8 and 9, in which the ligand D is a phosphine group of formula (5) or (6) below: 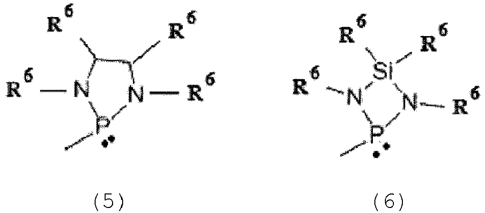 in which the groups R⁶ are identical or different and represent an alkyl group containing from 1 to 10 carbon atoms.

11. Organic compound (C) according to any one of Claims 8-10, represented by one of formulae (7), (8), (9), (10), (11), (12) and (13):

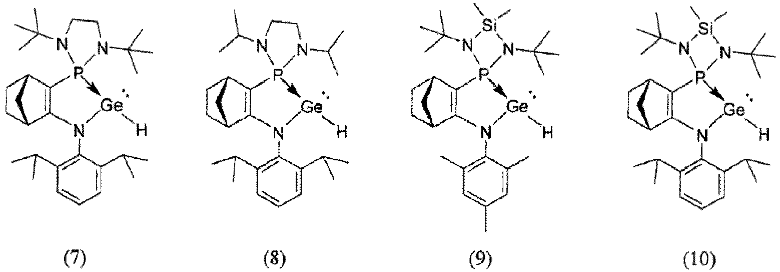

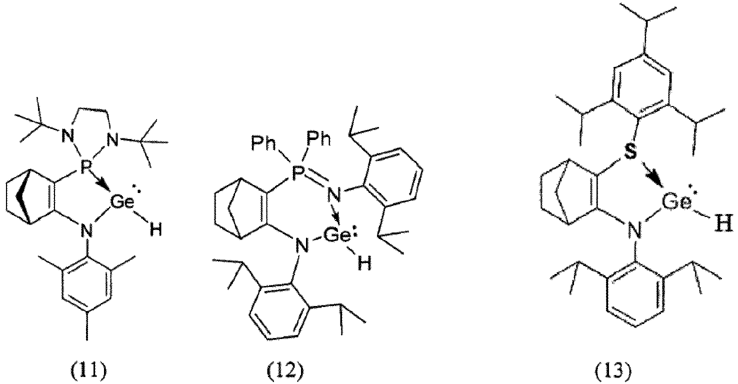

12. Use of an organic compound (C) according to any one of Claims 8 to 11, as a hydrosilylation catalyst.

13. Composition comprising:
- at least one unsaturated compound (A) comprising at least one ketone function, aldehyde function, alkene function and/or alkyne function,
- at least one compound (B) comprising at least one hydrosilyl function, and
- a catalyst chosen from the organic compounds (C) according to any one of Claims 8 to 11.

14. Composition according to Claim 13, **characterized in that** the molar concentration of catalyst in the composition is from 0.01% to 10%, preferably from 0.1% to 7.5% and more preferably from 0.5% to 5.5% relative to the number of moles of unsaturated compound (A).
